# EUROPÄISCHE PATENTSCHRIFT

(11) **EP 2 240 812 B1**
(45) Veröffentlichungstag und Bekanntmachung des Hinweises auf die Patenterteilung: **06.03.2019**
(21) Anmeldenummer: 09706950.4
(22) Anmeldetag: 30.01.2009
(51) Int. Cl.: G02B 23/18, G02B 23/10, G02B 23/04, G02B 7/06, G02B 7/12, B25G 1/10, B25G 1/00, G01C 3/04, G01S 17/08, F41G 3/06

(54) **BEOBACHTUNGSGERÄT MIT ENTFERNUNGSMESSER**
OBSERVATION DEVICE WITH RANGE FINDER
APPAREIL D'OBSERVATION ÉQUIPÉ D'UN TÉLÉMÈTRE

(30) Priorität: 31.01.2008 AT 1532008; 01.02.2008 AT 1632008; 02.02.2008 EP 08001979; 30.07.2008 US 137406
(43) Veröffentlichungstag der Anmeldung: 20.10.2010
(73) Patentinhaber: Swarovski-Optik KG., 6067 Absam (AT)
(72) Erfinder: ZIMMERMANN, Andreas, 6166 Fulpmes (AT); PERNSTICH, Ludwig, 6063 Rum (AT)
(74) Vertreter: Burger, Hannes
(86) Internationale Anmeldenummer: PCT/AT2009/000038
(87) Internationale Veröffentlichungsnummer: WO 2009/094688

(56) Entgegenhaltungen:
- EP-A- 0 961 147
- WO-A1-01/71407
- WO-A1-97/11399
- DE-A1- 2 502 662
- DE-A1- 2 714 412
- DE-A1-102004 054 182
- DE-C1- 19 933 172
- DE-U1-202006 017 705
- JP-A- 2007 127 690

## Beschreibung

Die Erfindung betrifft ein fernoptisches Gerät mit zumindest zwei Tuben. Es sind bereits binokulare Ferngläser mit einem Laser-Entfernungsmesser bekannt, bei denen in einem der beiden visuellen Strahlengänge auch ein Funktionselement des Laser-Entfernungsmessers integriert ist. So ist bspw. in der DE 10 2004 054 182 B4 beschrieben, dass der objektivseitige Strahlengang eines der beiden Beobachtungsstrahlengänge des Feldstechers gleichzeitig auch einen Teil des Strahlengangs des Laserempfängers bildet und die vom Objekt reflektierte Laserstrahlung mit Hilfe eines optischen Teilers zu dem Laserempfänger bzw. Detektor umgelenkt wird. Andererseits ist für den Lasersender ein baulich separierter Strahlengang vorgesehen, der im Bereich der Gelenkachse des Feldstechers angeordnet und parallel zu den Beobachtungsachsen der visuellen Strahlengänge ausgerichtet ist. Dazu ist vor dem Lasersender lichtaustrittsseitig eine Kollimationslinse vorgesehen. Nachteilig ist bei diesem binokularen Fernglas mit einem Laserentfernungsmesser, dass die Handhabung des Gerätes erschwert und keine der gewünschten Ergonomie bei solchen Ferngläsern entsprechende Ausgestaltung möglich ist. Weiters ist es bereits aus der US 6,753,951 B2 bekannt, bei einer fernoptischen Einrichtung mit der ein entferntes Objekt über einen visuellen Strahlengang beobachtet werden kann, einen Laser-Entfernungsmesser vorzusehen. Dabei wird zwischen dem Auge des Beobachters und Benutzers des visuellen Strahlenganges und einer Fokussiereinrichtung für den visuellen Strahlengang ein Laserstrahl in den visuellen Strahlengang eingeleitet und der vom Objekt reflektierte Laserstrahl über eine Optik vor dem Auge des Benutzers einem Laserempfänger zur Auswertung zugeführt. Nachteilig ist dabei, dass eine über einen Motor angetriebene, rotierende Blende benötigt wird, um eine Trennung des ausgehenden Laserstrahls und des reflektierten Laserstrahls vorzunehmen.

Weitere bekannte fernoptische Einrichtungen weisen sowohl für die visuellen als auch für den Laserstrahl und den reflektierten Laserstrahl eigene Strahlengänge auf, die über gesonderte, optische Vorrichtungen auf das entfernte Objekt gerichtet sind. Die Fokussierung des Laserstrahls erfolgt dabei sowohl für den ausgehenden Laserstrahl als auch für den vom Objekt reflektierten Laserstrahl über eine jeweils eigene Fokussiereinrichtung, die mit der vom Bediener betätigten Fokussiereinrichtung für den visuellen Strahlengang antriebsverbunden sind. Durch den komplexen Aufbau sind eine Fülle von mechanischen und optischen Bauteilen erforderlich.

Andere fernoptische Einrichtungen wie beispielsweise die DE 197 27 988 A1 sowie die DE 69 18 690 U, DE 295 18 708 U1, DE 101 22 936 A1 und DE 27 14 412 A1 beschreiben ebenfalls unterschiedlichste Ausgestaltungen von Laserentfernungsmessern in Verbindung mit visuellen Strahlengängen, wobei jedoch ein exaktes Messergebnis aufgrund des komplexen Aufbaues und der Strahlenführung nicht erreichbar ist.

Das Dokument EP 0 961 147 A der gleichen Anmelderin zeigt ein Fernglas mit zwei Beobachtungsteilen, die über zwei Verbindungselemente, die in Richtung der Längsachse der Beobachtungsteile voneinander distanziert angeordnet und in einem vorbestimmbaren Abstand gehalten sind. Das fernoptische Gerät gemäß EP 0 961 147 A weist aber keinen Messstrahlengang auf.

In dem Dokument DE 25 02 662 A1 ist ein Laserentfernungsmesser offenbart, der ein gemeinsames optisches System für den gesendeten und reflektierten Messstrahl der Laserentfernungsmessvorrichtung aufweist. Zum Anvisieren eines Ziels ist eine im Entfernungsmesser vorgesehene Visiereinrichtung angeordnet oder es ist eine Zusatzoptik vorgesehen, mit der unter Verwendung des für die Messstrahlen verwendeten Strahlenganges das Anvisieren erfolgen kann.

Das Dokument WO 97/11399 A1 hat ein integriertes System für Tag- und Nachtsicht zum Gegenstand, wobei neben einem Bildwandler für den Empfang von Infrarotlicht in dem System auch ein Laserentfernungsmesser vorhanden ist. Dabei wird das Licht eines Lasersenders über einen ersten Strahlenteiler in den visuellen Strahlengang, in Richtung auf ein entferntes Objekt hin, eingekoppelt. Von einem Ziel reflektiertes Laserlicht wird an einem zweiten Strahlenteiler aus dem visuellen Strahlengang ausgekoppelt und auf einen Detektor hin umgeleitet. Das beschriebene System weist weiters ein Display zur Darstellung einer Zielmarke auf, dessen Bild durch einen dritten Strahlenteiler, der vor dem Okular angeordnet ist, in den visuellen Strahlengang eingekoppelt wird.

Der Erfindung liegt die Aufgabe zu Grunde, ein fernoptisches Gerät mit zumindest zwei Tuben zu schaffen, mit welchem ein exaktes Anvisieren eines Zieles und eine erhöhte Bedienerfreundlichkeit bei solchen Geräten mit integrierter Entfernungsmessung erreicht wird.

Die Aufgabe der Erfindung wird durch ein fernoptisches Gerät nach Anspruch 1 oder 2 gelöst. Vorteilhaft ist bei dieser Ausführung nunmehr, dass trotz der Integration einer Entfernungsmessvorrichtung in das fernoptische Gerät eine ausgeglichene Gewichtsverteilung die ein exakteres Anvisieren des Ziels ermöglicht, erreicht wird. Zudem kommt auch dass die Handhabung des Gerätes durch den größeren Erfassungsbereich und somit die Bedienerfreundlichkeit beim Einstellen der Abstände der Tuben und beim Handhaben des fernoptischen Gerätes zum Anvisieren eines Zieles erheblich verbessert wird. Dies ermöglicht auch ein längeres, ermüdungsfreies Halten des fernoptischen Gerätes in einer Visierposition, sodass über längere Dauer ein zitterfreies Anvisieren eines Zieles möglich ist, wie dies beispielsweise bei den unterschiedlichen jagdlichen Aufgaben erforderlich ist. Auch wird ein verbessertes Ansprechen des Zieles und eine kontinuierlich fortlaufende Ermittlung der Entfernung erzielt. Darüberhinaus ist durch die Anordnung des Messtrahlenganges außerhalb der genannten Teilbereiche sichergestellt, dass es während des Halten des Geräts zu keiner Abschattung oder Beeinträchtigung des Messstrahls durch die Hände des Benutzers kommt. Durch die erfindungsgemäße Anordnung ist es auch möglich sämtliche Finger mit Außnahme der Daumen zwischen die Beobachtungsteile einzuführen um das Gerät während des Messvorganges möglichst stabil halten zu können. Darüberhinaus wird der Vorteil erzielt, dass bei einer derartigen Anordnung die beiden Daumen frei sind um Schalter zum Auslösen des Messvorganges zu betätigen.

Gemäß einer Ausführungsform des Anspruchs 2 ist die Summe der Breiten der Verbindungselemente zwischen den beiden Beobachtungsteilen (3,4) in Richtung der Längsachsen geringer als 90 mm. Dadurch ist es möglich, einen Bereich am Gerät zu schaffen, der ein Umgreifen der Beobachtungsteile von der Oberseite derselben ermöglicht. Darüber hinaus ist es möglich, durch die geringe Beeinträchtigung durch Verbindungselemente dem Benutzer eine variable Griffpositionsauswahl zu bieten.

Gemäß der Erfindung sind die Beobachtungsteile über zwei Verbindungselemente in einer vorbestimmbaren Distanz zueinander gehaltert, wobei bei Draufsicht auf die Ebene die zwei Verbindungselemente durch einander unmittelbar gegenüberliegende einander zugewandte Teilbereiche der Beobachtungsteile getrennt sind. Bei dieser Ausführungsvariante kann im Vergleich zu einer klassischen, massiven Konstruktion Gewicht eingespart werden, jedoch gleichzeitig eine präzise Parallelität der Strahlengänge in den beiden Beobachtungsteilen gewährleistet werden.

Gemäß Anspruch 2 sind die Beobachtungsteile über zwei Verbindungselemente in einer vorbestimmbaren Distanz zueinander gehaltert, wobei bei Draufsicht auf die Ebene die einander zugewandten Teilbereiche der Beobachtungsteile zwischen den beiden Verbindungselementen über eine parallel zur Längsachse der Beobachtungsteile gerichtete Länge von 50 bis 120 mm einander unmittelbar gegenüberliegen, und so ein ausreichender Griffbereich geschaffen wird, welcher ein komfortables Halten des Gerätes in Transportlage, zur Gebrauchslage 90° versetzt, um die Schwenkachse ermöglicht.

Gemäß der Erfindung ist ein Teil des Messstrahles eines Messstrahlensenders in dem ersten Beobachtungsstrahlengang integriert, um eine optimale Gleichläufigkeit der beiden Strahlengänge zu gewährleisten.

Vorteilhaft ist ein Teil des Messstrahlengangs eines Messstrahlenempfängers in dem ersten Beobachtungsstrahlengang integriert, so dass aufgrund des größeren Objektivs eines Beobachtungsstrahlengangs gegenüber einem klassischen Messstrahlenobjektiv ein größerer Anteil der reflektierten Messstrahlung empfangen werden kann.

Bei einer Ausbildung, bei der ein Teil des Messstrahlengangs des Messstrahlensenders und ein Teil des Messstrahlengangs des Messstrahlenempfängers in dem ersten Beobachtungsstrahlengang integriert sind, ist es möglich, die Vorteile der Gleichläufigkeit des Messstrahlengangs und des Beobachtungsstrahlengangs mit der erhöhten Empfangsleistung der rückläufigen Messstrahlung zu kombinieren.

Zur Einleitung des Messstrahlengangs des Messstrahlensenders und zur Ausleitung des Messstrahlengangs des Messstrahlenempfängers in bzw. aus dem ersten Beobachtungsstrahlengang ist zumindest ein optisches Bauelement angeordnet, da dadurch eine Trennung bzw. Integration des Mess- und des Beobachtungsstrahlengangs möglich wird.

Dabei sind zumindest die Bereiche der Einleitung und vorteilhaft die Bereiche der Ausleitung an einer einzigen Fläche des optischen Bauelements angeordnet, da hierdurch die Komplexität wie auch die Baulänge des Gerätes verringert werden können.

Gemäß der Erfindung ist als Messstrahlensender ein Lasersender und als Messstrahlenempfänger ein Laserempfänger angeordnet, wodurch der Messstrahl stark gebündelt werden kann und damit gute Messergebnisse erzielt werden können.

Von Vorteil ist aber auch eine Ausbildung mit einer Integration zumindest eines Teiles eines Strahlenganges eines opto-elektronischen Anzeigeelements in dem oder einem der Beobachtungsstrahlengänge, da dadurch eine Anzeige im Blickfeld des Benutzers gewährleistet ist und dadurch eine Interpretation durch den Benutzer unter Beibehaltung des Blickkontaktes zum Objekt gewährleistet ist.

Erfindungsgemäß ist der Strahlengang einer Zielmarke zusammen mit dem Strahlengang des Messstrahlsenders in einen der Beobachtungsstrahlengänge integriert, wobei die Vereinigung des Strahlenganges des Messstrahlsenders mit dem Beobachtungsstrahlengang und der Übergang des Strahlenganges der Zielmarke in den Beobachtungsstrahlengang an einer gemeinsamen Fläche eines Umlenkprismas lokalisiert sind.

Erfindungsgemäß umfassen die Beobachtungsstrahlengänge jeweils eine Fokussiereinrichtung, durch die der Beobachtungsstrahlengang und der Messstrahlengang fokussierbar sind. Dadurch ist es vorteilhafter Weise möglich, dass sowohl der Messstrahlengang wie auch der Beobachtungsstrahlengang synchron auf ein Objekt hin fokussiert werden, wodurch eine verbesserte Rücklaufleistung des Messstrahls erzielt wird.

Die weitere Ausgestaltung mit einer Laufzeitermittlungseinrichtung, die direkt oder über eine Steuer- und Auswerteeinheit mit dem Messstrahlensender dem Messstrahlenempfänger und dem opto-elektronischen Anzeigeelement verbunden ist, gewährleistet eine elektronische Anzeige des durch Laufzeitermittlung gemessenen Entfernungswerts zum Objekt. Vorteilhaft ist eine Ausbildung, bei der zwischen dem opto-elektronischen Anzeigeelement und der Steuer- und Auswerteeinrichtung eine Schaltrichtung zur Anzeige unterschiedlicher Symbole oder Daten zum Beispiel einer Zielmarke und/oder eines Messwertes angeordnet ist. Dadurch ist es möglich, unterschiedliche Zielmarkendarstellungen bzw. Messwertformate über die opto-elektronische Anzeige darstellen zu können.

Durch die Weiterbildung, bei der ein opto-elektronisches Anzeigeelement mit einer Schalteinrichtung zur wahlweisen Einleitung der Strahlengänge zur Darstellung einer Zielmarke und/oder eines Messwertes in zumindest einem der Beobachtungsstrahlengänge verbunden ist, ist es dem Benutzer möglich, je nach seiner Präverenz bzw. Sehleistung zu entscheiden, auf welchem Anzeigeelement ein bestimmter Wert bzw. die Zielmarke dargestellt werden soll.

Durch die Ausbildung, bei der zumindest ein Tubusgehäuse des Beobachtungsteils aus einem Leichmetallwerkstoff, insbesondere aus Magnesium bzw. einer Magnesium enthaltenden Legierung besteht, kann das Gewicht des Geräts wesentlich vermindert werden und dies bei gleichzeitiger Erhöhung der Festigkeit des Gehäuses.

Nach einer weiteren vorteilhaften Ausbildung besteht zumindest ein Tubusgehäuse des Beobachtungsteils aus Composite Material, insbesondere aus faserverstärktem Kunststoff. Dadurch kann die Bruchfestigkeit des Gehäuses bei gleichzeitiger Gewichtsreduktion erhöht werden.

Vorteilhaft ist auch eine Ausbildung, bei der der Schwenkbereich der Gelenke zur Veränderung der Distanz zwischen den beiden Längsachsen der Beobachtungsteile in der durch diese verlaufenden Ebene zumindest zwischen 50 mm und 70 mm ausgebildet ist. Dadurch ist es möglich das Gerät optimal auf die Augenweite des Benutzers einzustellen.

Bei der weiteren Ausgestaltung, bei der die beiden Beobachtungsteile über als Gelenk ausgebildete Verbindungselemente mit einer zu den Längsachsen der beiden Beobachtungsteile annähernd parallel verlaufenden Schwenkachse schwenkbar verbunden sind, ist von Vorteil, dass eine Anpassung des Augenabstandes an unterschiedliche Benutzer möglich ist.

Umfasst das Verbindungselement jeweils einen von jeden der beiden Beobachtungsteilen angeordneten bzw. angeformten Verbindungsarm, so ist einerseits eine exakte Bearbeitung und Ausrichtung des Bauteils möglich und andererseits ist beim Zusammenfügen eine exakte gegenseitige Ausrichtung erzielbar.

Vorteilhaft ist auch eine weitere Ausführungsform, bei der als Verbindungselemente mehrere Gelenkbrücken angeordnet sind. Dadurch ist ein präzises Verschwenken der beiden Beobachtungsteile möglich.

Vorteilhaft ist es auch, wenn die Fokussiereinrichtung mit einem Verstellantrieb verbunden ist. Dadurch ist eine automatische Einstellung der Fokussierung möglich, darüber hinaus ergeben sich in Kombination mit der Verwendung des Wertes aus der Entfernungsmessung Möglichkeiten zu einer Autofokussierung.

Möglich ist auch eine Verbindung der Steuer- und Auswerteeinheit mit dem Verstellantrieb bzw. einem Antriebsmotor zum Beispiel einem Schrittschaltmotor. Eine automatisierte

Einstellung der Fokussierung ist dadurch über günstige Bauteile möglich; die darüber hinaus ein geringes Gewicht aufweisen.

Schließlich ist aber auch eine Ausbildung möglich, bei der sämtliche optische, optoelektrische und elektrische Bauteile in den beiden Beobachtungsteilen symmetrisch bezüglich der der Schwenkachse angeordnet sind, wodurch eine optimale Gewichtsverteilung erreicht wird. Darüber hinaus sind beide Teile für sich allein betrachtet als fernoptische Geräte einsetzbar.

Zum besseren Verständnis der Erfindung wird diese anhand der nachfolgenden Figuren näher erläutert.

Es zeigen jeweils in stark schematisch vereinfachter Darstellung:
- Fig. 1: ein fernoptisches Gerät in Draufsicht;
- Fig. 2: das fernoptische Gerät nach Fig. 1 in Stirnansicht;
- Fig. 3: ein Optikschema des fernoptischen Gerätes nach Fig. 1 und 2 mit integriertem Entfernungsmesser in schematischer Draufsicht;
- Fig. 4: eine erfindungsgemäße Ausführungsvariante des fernoptischen Gerätes in Draufsicht;
- Fig. 5: eine weitere erfindungsgemäße Ausführungsvariante des fernoptischen Gerätes mit speziell ausgebildeten Verbindungselementen in Draufsicht;
- Fig. 6: eine andere Anordnung des Verbindungselementes zwischen den Beobachtungsteilen eines fernoptischen Gerätes in Draufsicht;
- Fig. 7: ein fernoptisches Gerät mit einem zusätzlich zu den Beobachtungsstrahlengängen angeordneten Messstrahlengang in Seitenansicht teilweise geschnitten;
- Fig. 8: ein weiteres Beispiel eines Gerätes mit einem dritten Strahlengang.

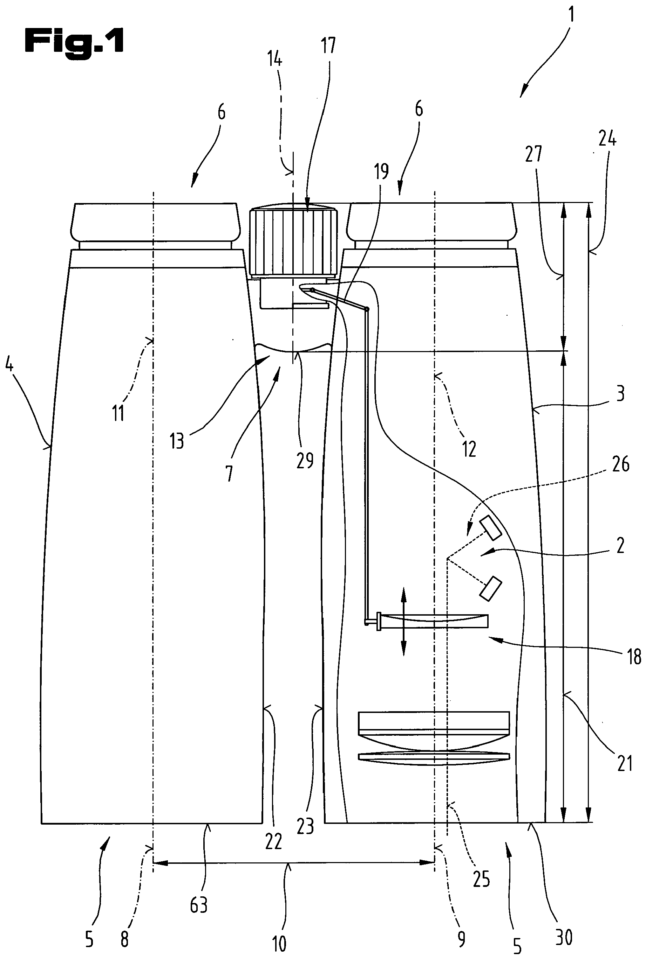

In den Fig. 1 bis 3 ist ein fernoptisches Gerät 1 beispielsweise ein binokulares Beobachtungsgerät, insbesondere ein Fernglas mit einer integrierten Messvorrichtung 2 z.B. einem Laser-Entfernungsmesser gezeigt. Das Gerät 1 umfasst einen ersten Beobachtungsteil 3 und einen zweiten Beobachtungsteil 4 die bevorzugt tubusartig ausgebildet sind. Die beiden Beobachtungsteile 3 und 4 umfassen ein Objektiv 5 und ein Okular 6 zur vergrößerten Darstellung eines zu beobachtenden Objektes. Die beiden Beobachtungsteile 3 und 4 sind über ein Verbindungselement 7 miteinander derart verbunden, dass sie nebeneinander in einer im wesentlichen parallelen Lage ihrer Längsachsen 8, 9 angeordnet sind. Diese Längsachsen 8, 9 können in einer unterschiedlichen Distanz 10 von einander angeordnet werden und bilden gleichzeitig den ersten und zweiten Beobachtungsstrahlengang 11 und 12, die jeweils nur die entsprechenden Hauptstrahlen bzw. die entsprechenden optischen Achsen der Beobachtungsteile 3 und 4 symbolisieren und vereinfacht dargestellt sind. Vorteilhaft ist es dabei, wenn die beiden Beobachtungsteile 4 gleichartig zum Beispiel bevorzugt symmetrisch zu einen zwischen zwei Beobachtungsstrahlengängen 11, 12 angeordneten Gelenk 13 mit seiner Schwenkachse 14 ausgebildet sind. Dadurch ist vor allem an die Ausführungsvariante des Grundgehäuses der Beobachtungsteile 3, 4 und der Aufbau der Fokussiereinrichtungen zu denken., Einzelne Details wie beispielsweise die Verbindungselemente 7 welche zum Beispiel auch ineinander greifen können und dementsprechend gegengleich und überlappend ausgeführt sein, können abweichen.

Hierbei ist festzuhalten, dass in der gesamten Beschreibung, wenn von Strahlengängen gesprochen wird, jeweils ein Bündel von Strahlen, also ein so genanntes homozentrisches Strahlenbündel, zu verstehen ist.

Zur Einstellung dieser Distanz 10 sind die beiden Beobachtungsteile 3, 4 über ein Gelenk 13, welches das Verbindungselement 7 bilden kann oder im Verlauf des Verbindungselementes angeordnet sein kann, um eine zu den Längsachsen der Beobachtungsteile 3, 4 parallel verlaufende Schwenkachse 14 schwenkbar miteinander verbunden.

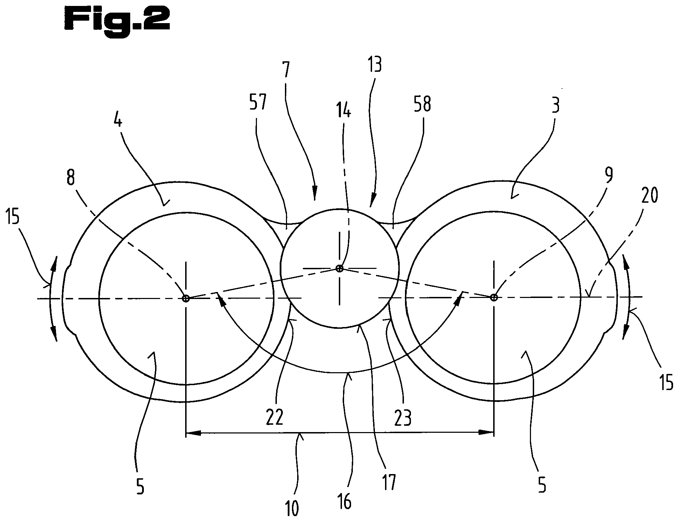

Damit können die beiden Beobachtungsteile 3, 4 wie am besten aus Fig. 2 zu ersehen ist, um diese Schwenkachse 14 entsprechend dem Pfeil 15 um einen Winkelbereich 16 verschwenkt werden, um die Distanz 10 der Längsachsen bzw. der Strahlengänge 11, 12 an den Augenabstand des jeweiligen Benutzers des fernoptischen Gerätes 1 anpassen zu können. Hierzu ist zumindest eine Verstellung der Distanz zwischen 50 und 70 mm vorteilhaft, selbstverständlich kann aber jede beliebige Ausbildung vorgenommen werden um diese Distanz auch auf kleinere oder größere Werte verändern zu können.

Im Bereich des Verbindungselementes 7 ist es auch möglich, eine Verstellvorrichtung 17 für eine Fokussiereinrichtung 18 vorzusehen, mit der das Gerät 1 auf das anvisierte Ziel fokussiert werden kann. Die nur schematisch dargestellten Übertragungselemente 19 für die Fokussiereinrichtung 18 können hierbei wie in Fig. 1 schematisch angedeutet zumindest zum Teil durch das Verbindungselement 7 hindurchgeführt sein.

Wie weiters am besten aus der Fig. 1 bei der Draufsicht auf das Gerät 1 senkrecht bezüglich einer Ebene 20 in der die Längsachsen 8, 9 angeordnet sind ersichtlich ist, liegen über eine parallel zur Längsachse 8, 9 der Beobachtungsteile 3, 4 sich erstreckende Länge 21 die einander zugewandten Teilbereiche 22, 23 der Beobachtungsteile 3, 4 einander unmittelbar gegenüber, dass heißt, dass die Distanz zwischen den nächstliegenden Gehäusepunkten der Beobachtungsteile 3, 4 durch keine über diese vorspringenden Bauteile verringert ist, somit also keiner der Bauteile über die Außenhülle der Beobachtungsteile 3, 4 in Richtung des gegenüberliegenden Teilbereiches 22, 23 des anderen Beobachtungsteiles vorragt, sowie auch von dem Verbindungselement 7 kein Bauteil in diesen Bereich zwischen den beiden Teilbereichen 22, 23 in Richtung der Längsachsen 8, 9 hineinragt. Selbstverständlich ist bei dieser Definition der einander gegenüberliegenden Teilbereiche 22, 23 die äußerste Umhüllung der Beobachtungsteile 3 und 4 zu verstehen. Wenn diese Beobachtungsteile 3, 4 ein Grundgehäuse aufweisen, welches mit Verstärkungselementen und/oder Verkleidungselementen zumindest partiell umhüllt versehen bzw. umhüllt ist, sind jeweils die äußeren Begrenzenden der Beobachtungsteile 3, 4 zu verstehen die als nächstliegende Gehäusepunkte der Beobachtungsteile 3, 4 anzusehen sind.

Diese Länge 21 kann mehr als 30 mm, bevorzugt 50 bis 120 mm betragen, kann aber auch als ein Anteil der in Richtung der Längsachsen 8, 9 der Beobachtungsteile 3, 4 gerichteten Länge 24 der Beobachtungsteile 3, 4 festgelegt werden. Hierbei kann die Länge 21 über die die einander zugewandten Teilbereiche 22, 23 der Beobachtungsteile 3, 4 einander unmittelbar gegenüberliegen, zum Beispiel zwischen 20% und 90 % bevorzugt 30 bis 80 % der Länge 24 der Beobachtungsteile 3, 4 betragen.

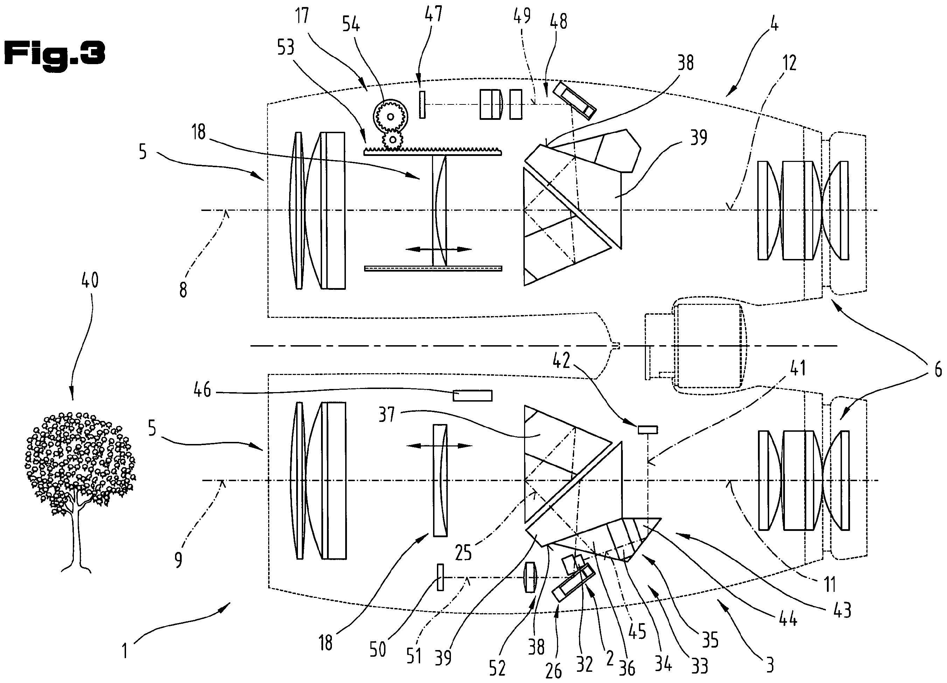

Wie die Darstellung in Fig. 1 und 3 weiter zeigen, liegen auch die Längsachsen 8, 9 der Beobachtungsteile 3, 4 und somit auch die Beobachtungsstrahlengänge 11, 12 und ein Messstrahlengang 25 des Laser-Entfernungsmessers 26 außerhalb der einander unmittelbar gegenüberliegenden Teilbereiche 22, 23 der Beobachtungsteile 3, 4.

Die Anordnung, bei der eine entsprechend große Länge 21 der Teilbereiche 22, 23 der Beobachtungsteile 3, 4 einander unmittelbar gegenüberliegen, ermöglicht nunmehr auch sowohl beim Gebrauch des Gerätes 1 zum Anvisieren eines Zieles als auch beim Handhaben des Gerätes 1 ein einfacheres und sicheres Erfassen aber auch ein ruhiges, positioniertes Halten des Gerätes 1. Dadurch kann in allen Gebrauchssituationen eine erhebliche Verbesserung gegenüber bisher bekannten Beobachtungsgeräten mit Messstrahlen beispielsweise für eine Entfernungsmessung erzielt werden. Auch ist durch diese Art des Umfassens, bei welchem die Enden der Finger zwischen die beiden Beobachtungsteile 3, 4 ungehindert vorragen können, eine geringere Muskelbelastung in der Hand erzielbar und daher auch über längere Zeit ein ermüdungsfreies Anvisieren und Messen möglich.

Darüber hinaus ist es nunmehr in vorteilhafter Weise möglich, derartige Geräte 1 nur durch eine Klemmung zwischen den Fingern und dem Handballen zu fixieren und zu halten, ohne dass es einer Klemmkraft des Daumens des Benutzers bedarf.

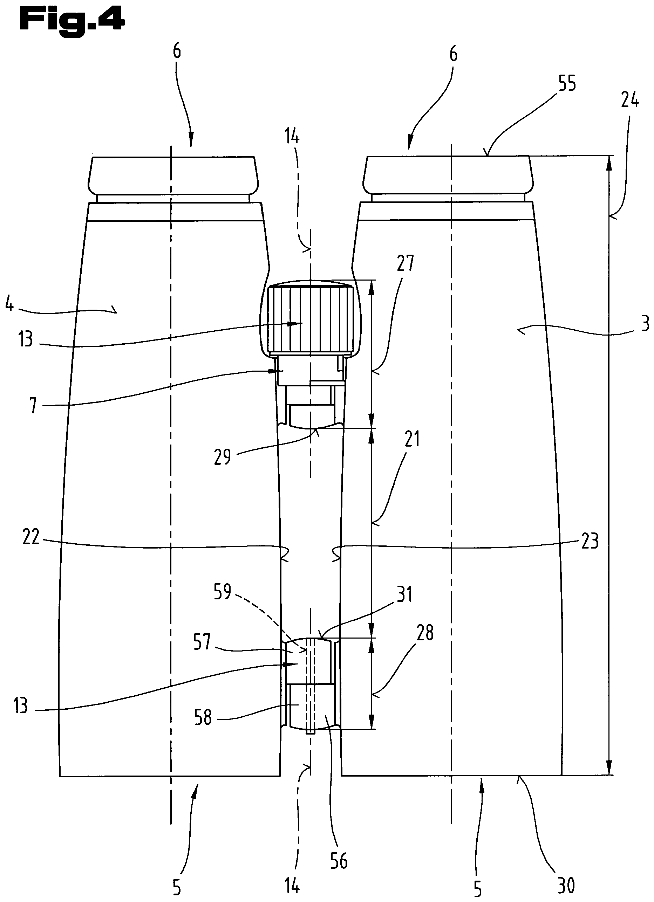

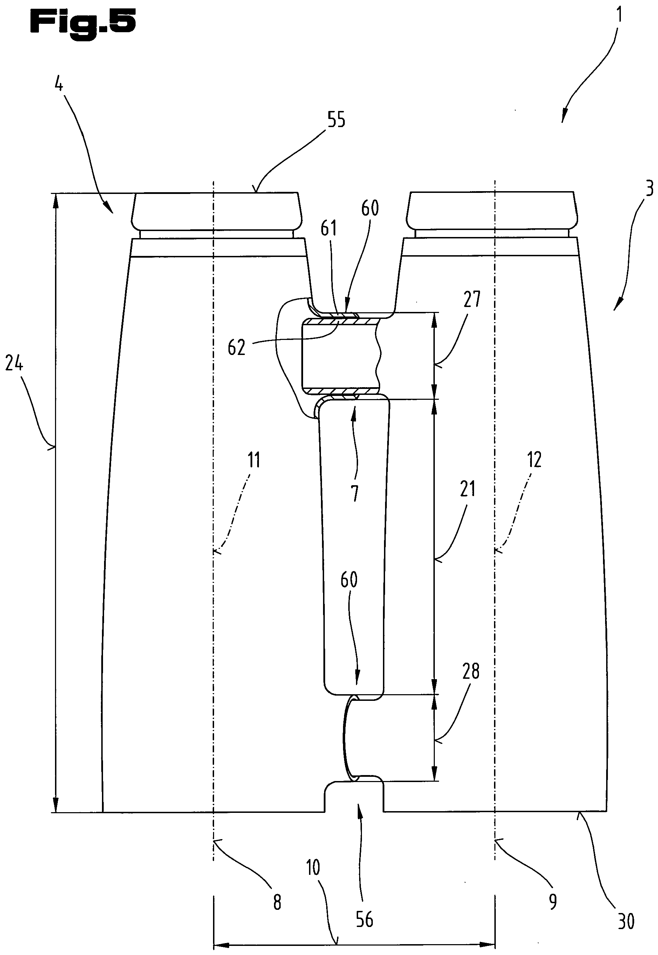

Vorteilhaft ist aber auch, wenn eine Breite 27 des Verbindungselementes 7 oder dann, wenn mehrere Verbindungselemente 7 zur positionierten Halterung und Führung der beiden Beobachtungsteile 3, 4 angeordnet sind, die Summe der Breiten 27, 28 der Verbindungselemente 7 - wie in Fig. 4 oder 5 noch näher gezeigt wird - zwischen den beiden Beobachtungsteilen 3, 4 in Richtung deren Längsachsen 8, 9 geringer ist als 45 % der Länge 24 bzw. der Distanz zwischen dem objektivseitigen und dem okularseitigen Ende des Gerätes 1. Auch bei der Bemessung der Länge 24 bzw. der Distanz zwischen dem objektivseitigen und dem okularseitigen Ende werden jeweils die äußersten Begrenzungen im Bereich des Objektivs 5 bzw. Okulars 6 des Grundgerätes (also ohne Zubehör) verstanden.

Vorteilhaft ist auch, wenn zwischen einer objektivseitigen Stirnseite 29 des Verbindungselementes 7 und einem objektivseitigen Ende 30 der Beobachtungsteile 3, 4 oder des Gerätes 1 die einander zugewandten Seitenflächen 22, 23 der Beobachtungsteile 3, 4 über eine parallel zur Längsachse 8, 9 gerichtete Länge 21 die zwischen 20% - 90%, bevorzugt 30% - 80 % der Länge 24 der Beobachtungsteile 3, 4 beträgt einander unmittelbar gegenüberliegen.

Gleiches gilt auch dann, wenn diese Länge über die einander zugewandten Teilbereiche 22, 23 bzw. Seitenflächen der Beobachtungsteile 3, 4 zwischen der objektivseitigen Stirnseite 29 des am Bereich des Okulars 6 angeordneten Verbindungselementes 7 und einer okularseitigen Stirnseite 31 eines weiteren im Bereich des Objektives 5 angeordneten Verbindungselementes 56 liegen.

Die Fig. 3 zeigt eine schematische Darstellung der optischen Komponenten des fernoptischen Gerätes 1. In dieser Fig. 3 ist auch die Messeinrichtung 2 in größerem Detail dargestellt. So ist im Beobachtungsteil 3 ein Messstrahlensender 32 mit einem Senderoptiksystem 33 und einer Sendeoptik 34 ersichtlich. Der Messstrahlensender 32 ist derart in den ersten Beobachtungsteil 3 integriert, dass ein Teil des Messstrahlenganges 25 des Messtrahlensenders 32 in den ersten Beobachtungsstrahlengang 11 umgelenkt ist.

Zur Umlenkung des Messstrahlenganges 25 sind in dem ersten Beobachtungsteil 3 optische Bauelemente vorgesehen, gemäß diesem Ausführungsbeispiel, ein Umlenkprisma 35 und ein Teilerprisma 36. Das Teilerprisma 36 ist dazu an einer dem Dachkantenprisma 37 gegenüberliegenden Fläche 38 eines Umlenkprismas 39 angeordnet bzw. an der Fläche 38 des Umlenkprismas 39 mit diesem verbunden.

Die Fläche 38 bildet einen Strahlenteiler, in dem an dieser eine teildurchlässige Beschichtung vorgesehen ist. Durch diese Beschichtung der Fläche 38 erfolgt an dieser eine Reflexion des visuellen Beobachtungsstrahlenganges 11, wohingegen das Licht des Messstrahlensenders 32 nicht reflektiert wird und ungehindert durch die Fläche 38 hindurch tritt. Die Vereinigung des optischen Strahlenganges 25 des Messstrahlensenders 32 mit dem ersten visuellen Beobachtungsstrahlengang 11 ist somit an der Fläche 38 des Umlenkprismas 39 bzw. des Teilerprismas 36 lokalisiert. Dazu ist vorgesehen, dass die Richtung des Strahlenganges 25 des Messstrahlensenders 32 und die Richtung des ersten visuellen Beobachtungsstrahlenganges 11 in seinem objektivseitigem Verlauf im Bereich bzw. im Inneren des Umlenkprismas 39 gleichgerichtet sind. In dem der Strahlengang 25 des Messstrahlensenders 32 in seinem Verlauf auf das Objekt 40 hin auch die Fokussiereinrichtung 18 und das Objektiv 5 passiert, kann der Messstrahlensender 32 bzw. der Strahlengang auf dem Objekt 40 bzw. in der Objektebene fokussiert werden.

Hinsichtlich des in der Fläche 38 vorgesehenen Strahlenteilers sind unterschiedliche Ausführungsvarianten möglich. Im Falle der Verwendung einer wellenlängenspezifisch teildurchlässigen Beschichtung muss diese auf die Wellenlänge des Laserlichts des verwendeten Messstrahlensenders 32 abgestimmt sein. Dabei weist die Beschichtung eine wellenlängenabhängige Transmissionscharakteristik auf, die nur in einem sehr engen Wellenlängenbereich einem sehr hohen Wert des Transmissionskoeffizienten zeigt, wobei dieser enge Wellenlängenbereich der Wellenlänge der verwendeten Laserstrahlung des Messstrahlensenders 32 entspricht. Dabei kann die verwendete Laserstrahlung sowohl im sichtbaren Wellenlängenbereich, als auch in einem nicht sichtbaren Wellenlängenbereich liegen. Eine Verwendung eines im infraroten Bereich sendenden Messstrahlensenders 32 ist jedoch vorzuziehen, da dadurch eine Beeinträchtigung der visuellen Beobachtung vermieden wird.

So könnte beispielsweise die Adaption des Auges des Beobachters in der Dämmerung durch Streulicht von dem Messstrahlensenders 32 gestört werden. Um eine Strahlenteilung zu bewirken, könnte alternativ auch die Polarisation des verwendeten Laserlichts zur Selektion heran gezogen werden. Eine weitere alternative Möglichkeit für einen Strahlenteiler besteht in einer räumlichen Aufteilung, indem beispielsweise nur für einen Teilbereich des Raumwinkels eines Strahlengangs bzw. eines Strahlenbündels ein metallischer Spiegel verwendet wird.

Nach der Reflexion der vom Messstrahlensender 32 ausgesandten Energiestrahlung z.B. des Laserlichtes an einem entfernten Objekt 40 treten reflektierte Strahlen gemeinsam durch den ersten visuellen Strahlengang 11 wieder in das Gerät 1 ein. Bedingt durch die teildurchlässige Beschichtung der Fläche 38 zwischen dem Umkehrprisma 39 und dem Teilerprisma 36 erfolgt an dieser Fläche 38 eine Trennung eines Messstrahlengangs 41 der zu einem Messstrahlenempfängers 42 verläuft von dem ersten visuellen Beobachtungsstrahlengang 11. Zur Detektion bzw. Messung der reflektierten Strahlung ist der Messstrahlenempfänger 42 vorgesehen, wobei z.B. das reflektierte Laserlicht von einem Messstrahlensender 32 zu einem Lasersender dazu durch ein Empfangsoptiksystem 43 geführt ist, welches gemäß diesem Ausführungsbeispiel durch das Teilerprisma 36 und ein Empfängerprisma 44 gebildet ist.

Indem der erste visuelle Beobachtungsstrahlengang 11 und der Messstrahlengang 41 an der Fläche 38 zwischen dem Umkehrprisma 39 und dem Teilerprisma 36 vereinigt bzw. aufgespalten wird, ist somit auch ein Teil des Messstrahlengangs 41 in den ersten visuellen Beobachtungsstrahlengang 11 integriert. Somit sind bei diesem Gerät 1 mit einer Messeinrichtung 2 zur Integration des Strahlengangs 45 des Messstrahlensenders 32 bzw. Lasersenders und des Messstrahlengangs 41 in den ersten visuellen Beobachtungsstrahlengang 11 optische Bauelemente angeordnet, in denen ein Übergang zwischen dem ersten visuellen Strahlengang 11 und dem Strahlengang 45 des Lasersenders bzw. dem Strahlengang 41 des Messstrahlenempfängers 42 erfolgt.

Gemäß dem beschriebenen Ausführungsbeispiel ist darüber hinaus der Bereich des Übergangs an einem einzigen optischen Bauelement und zwar der Fläche 38 des Umlenkprismas 39 lokalisiert. Es erfolgt somit die Einleitung der Strahlung des Messstrahlensenders 32, als auch die Abtrennung der reflektierten Strahlung von dem ersten visuellen Beobachtungsstrahlengang 11 an der einzigen Fläche 38.

Erfindungsgemäß ist somit der Bereich des Übergangs, d.h. der Vereinigung bzw. der Aufspaltung der Strahlengänge 45,41 einerseits und des visuellen Beobachtungsstrahlengangs 11 andererseits zwischen dem beobachterseitigen Brennpunkt des Objektivs 5 und der Fokussiereinrichtung 18 bzw. dem Objektiv 5 angeordnet.

Für die Abbildung zwischen dem entfernten Objekt 40 einerseits und dem beobachterseitig erzeugten Bild des Objekts 40 andererseits, als auch für die Abbildung der Messstrahlen auf das entfernte Objekt 40 hin, ist somit dieselbe Anordnung der optischen Bauelemente des Objektivs 5 und der Fokussiereinrichtung 7 bestimmend. Diese räumliche Anordnung der genannten optischen Bauelemente zueinander hat den besonderen Vorteil, dass nur durch eine Veränderung der Einstellung eines einzigen optischen Bauelements, nämlich der Fokussiereinrichtung 7, sowohl eine Fokussierung des ersten visuellen Beobachtungsstrahlengangs 11, als auch des Strahlengangs 45 des Messstrahlensenders 32und des Messstrahlengangs 41 des Messstrahlenempfängers 42 vorgenommen werden kann. Damit wird erreicht, dass für jede Entfernungseinstellung die von dem entfernten Objekt 40 zurück geworfene Strahlung mit hoher Effizienz für die Entfernungsmessung genützt werden kann.

Die Entfernungsmessung erfolgt in der an sich bekannten Weise, basierend auf dem Prinzip der Laufzeitmessung z.B. eines Laserimpulses bzw. einer Laserimpulsfolge die vom Messstrahlensender 32 ausgesendet und von einem Objekt 40 zurückgeworfen wird. Aus dem Verhältnis der Zeitdifferenz zwischen den Aussenden eines Laserimpulses und dem Eintreffen des reflektierten Laserlichts bezogen auf die Lichtgeschwindigkeit ergibt sich sodann die Entfernung des anvisierten Objektes 40. Der Eintreffzeitpunkt des reflektierten Lasersignals wird durch den Messstrahlenempfänger 42 detektiert. Zur Berechnung und Steuerung der Funktionen des Gerätes 1 ist eine Steuer- und Auswerteeinheit 46 vorgesehen. Der darin schließlich errechnete Wert der Entfernung kann für den Beobachter im Gesichtsfeld dargestellt werden, indem in einem der beiden Beobachtungsteile 3, 4 ein opto-elektronisches Anzeigeelement 47 mit einem entsprechenden Anzeigeoptik 48 vorgesehen ist.

Der Anzeigeoptik 48 ist gemäß diesem Ausführungsbeispiel in dem zweiten Beobachtungsteil 4 derart angeordnet, dass der Strahlengang 49 der Anzeigeoptik 48 in dem okularseitigen Teil des zweiten visuellen Beobachtungsstrahlengangs 12 integriert ist. Der Bereich des Übergangs des Strahlengangs 49 der Anzeigeoptik 48 in den zweiten visuellen Beobachtungsstrahlengang 12 ist wie bereits für das erste Beobachtungsteil 3 beschrieben an einer teilreflektierenden Oberfläche 38 eines Umlenkprismas lokalisiert.

Selbstverständlich ist es auch möglich, den errechneten Wert der Entfernung bzw. die Zielmarke in beiden oder wahlweise in nur einem der beiden Beobachtungsteile 3, 4 anzuzeigen. Zusätzlich ist es in vorteilhafter Weise auch möglich, außen am Gerät 1 ein Display vorzusehen, auf dem die gemessene Entfernung kontinuierlich oder intermittierend bzw. auf Aufforderung durch den Bediener angezeigt werden kann.

Zudem ist eine Übertragung über Fernübertragungsmittel, insbesondere über drahtlose Fernübertragungsmittel, beispielsweise Funk oder Infrarot, der festgestellten Entfernung und sonstiger Daten, wie beispielsweise die gewählte Fokussierung und/oder ein Vergrößerungsfaktor und/oder Helligkeits- bzw. Temperaturwerte, in unterschiedliche Teile des Beobachtungsgerätes 1 oder gesonderte Anzeige- und/oder Auswertevorrichtungen möglich. Es ist aber auch zweckmäßig, diese im Gerät 1 abzuspeichern oder für verschiedene Auswertungen miteinander zu verknüpfen und abzuspeichern sowie auf Aufforderung, beispielsweise auf, einem auf der Außenseite des Gerätes 1 angebrachten Anzeigegerät darzustellen.

Darüber hinaus ist es möglich, mit diesen Übertragungsmitteln diese Daten auf ein externes Anzeigeelement bzw. einen Speicher oder Rechner zB einem PC, welches in vorteilhafter Weise auch unabhängig vom Gerät 1 ausgebildet bzw. angeordnet sein kann, zu übertragen bzw. abzuspeichern. Zweckmäßig ist vor allem eine Übertragung dieser Daten auf ein Zielfernrohr einer Waffe oder sonstige Systeme zur Überwachung bzw. zur Steuerung von Vorrichtungen, die derartige Entfernungsangaben benötigen.

Zur Erleichterung des Anvisierens eines zu beobachtenden Objektes 40 zu welchem die Entfernung gemessen werden soll, ist in dem ersten Beobachtungsteil 3 darüber hinaus eine Zielmarke 50 vorgesehen. Die Zielmarke 50 bzw. ein Strahlengang 51 der Zielmarke 50 wird über eine dazu vorgesehene Zielmarkenoptik 52 in dem okularseitigen Teil des ersten visuellen Beobachtungsstrahlenganges 11 überführt. Der Bereich des Übergangs des Strahlengangs 51 der Zielmarke 50 ist dabei ebenfalls an der zwischen dem Umlenkprisma 39 und dem Teilerprisma 36 liegenden Fläche 38 lokalisiert.

Gemäß einer alternativen Ausführungsform ist es auch möglich, neben dem Strahlengang 51 der Zielmarke 50 auch den Strahlengang 49 des Anzeigeelements 47 in dem ersten Beobachtungsteil 3 des Geräts 1 zu integrieren. Dabei wäre es aber zusätzlich auch von Vorteil, das Anzeigeelement 47 selbst zur Erzeugung der Zielmarke 50 zu verwenden. Für das Anzeigeelement 47 wird bevorzugt ein opto-elektronisches Anzeigeelement verwendet, dass eine individuelle Ansteuerung einzelner Bild erzeugender Pixel erlaubt. Damit kann auf einfache Weise eine Kalibrierung der Zielmarke 50 vorgenommen werden. Die Verwendung des opto-elektronischen Anzeigeelements 47 erlaubt darüber hinaus auch, dass die Form der Zielmarke 50 frei gewählt werden kann. So ist es beispielsweise möglich, dass der Beobachter über eine geeignete Eingabeeinrichtung die Geräteelektronik dazu veranlasst, als Zielmarke eine gewünschte Zielmarke 50 aus einem entsprechenden Speicher softwaremäßig zu wählen und zur Anzeige zu bringen. Die gleichzeitige Verwendung des Anzeigeelementes 47, auch zur Erzeugung der Zielmarke 50, hat insbesondere den Vorteil einer Reduktion der Zahl der erforderlichen Bauteile zur Herstellung des Gerätes 1.

Die Zielmarke 50 kann aber auch über ein optisches Element und eine Lichtquelle, beispielsweise eine entsprechend gestaltete Blende, hergestellt und in den visuellen Strahlengang der Beobachtungsteile 3, 4 eingeblendet werden.

Sowohl das Anzeigeelement 47, als auch die Vorrichtung zur Darstellung der Zielmarke 50 kann durch entsprechende opto-elektronische Bauelemente, insbesondere LED-, LCD-Displays oder ähnliches, gebildet sein.

Zwischen dem optisch elektronischem Anzeigelement 47 und der Steuer- und Auswerteeinrichtung 46 kann eine Schalteinrichtung zur Anzeige unterschiedlicher Symbole oder Daten zum Beispiel einer Zielmarke 50 oder eines Messwertes angeordnet sein.

Mit einer solchen Schalteinrichtung ist es zusätzlich oder unabhängig auch möglich, die Darstellung der Zielmarke 50 bzw. eines Messwertes wahlweise in einem der beiden oder beide Beobachtungsstrahlengänge 3, 4 zu bewirken.

Des Weiteren sei noch erwähnt, dass der Fokussiereinrichtung 18 ein Verstellantrieb 53 zugeordnet sein kann, der in Fig. 3 schematisch durch eine verstellbare Zahnstangenordnung im Beobachtungsteil 4 dargestellt ist. Der Verstellantrieb 53 kann mit einem Antriebsmotor 54 versehen sein, der zum Beispiel durch einen Schrittschaltmotor gebildet sein kann. Die Steuerung des Verstellantriebes 53 für die Fokussiereinrichtung 18 kann ebenso wie die der Zielmarke 50 bzw. des Anzeigeelementes 47 und des Messstrahlenempfängers 42 mit über schematisch in strichlierten Linien dargestellten Leitungen an die Steuer- und Auswerteeinheit 46 angeschlossen sein.

Der Ordnung halber sei festgehalten, dass die einzelnen Teile der Messeinrichtung 2 insbesondere der Laserentfernungsmesser 26 bzw. der Messstrahlensender 32, der Messstrahlenempfänger 42, die Anzeigeelemente 47, die Zielmarke 50 sowie ein Verstellantrieb 53 bzw. ein Antriebsmotor 54 der Fokussiereinrichtung 18 über entsprechende Verbindungsleitungen bzw. Platinen, vor allem flexible Platinen oder auch durch drahtlose Verbindungsstrecken über elektromagnetische Wellen bzw. nicht optische Signale mit der Steuer- und Auswerteeinheit 46 bzw. diese mit externen Anzeigeelementen oder Speichervorrichtungen oder Rechnern verbunden sein können.

Wie besser aus Fig. 4 ersichtlich, sind die beiden Beobachtungsteile 3, 4 gemäß der Erfindung über zwei Verbindungselemente 7, 56 miteinander verbunden.

In jedem der beiden Verbindungselemente 7, 56 können ein oder mehrere Gelenke 13 angeordnet sein. So ist es möglich, dass die Verbindungselemente 7, 56 mit einem einzigen Gelenk 13 mit einer Schwenkachse 14 versehen sein können. Damit sind die beiden Beobachtungsteile 3, 4 wie anhand der Fig. 2 bereits zuvor im Detail beschrieben um diese zentrale Schwenkachse 14 relativ zueinander verschwenkbar.

Selbstverständlich ist es aber auch möglich, zusätzlich zu diesen Gelenken 13 weitere Gelenke zwischen den den Beobachtungsteilen 3, 4 und den diesen zugewandten Enden der Verbindungselemente 7, 56 anzuordnen, sodass die Beobachtungsteile 3, 4 jeweils unabhängig voneinander relativ zu dem Verbindungselement 7, 56 bzw. den über die Gelenke 13 verschwenkbaren Teilen der Verbindungselemente 7, 56 verstellbar sind.

In dem vorliegenden Ausführungsbeispiel weisen die Verbindungselemente 7, 56 jeweils nur ein Gelenk 13 auf. Dieses Gelenk 13 wird durch 2 Verbindungsarme 57, 58 gebildet, die an den einander zugewandten Endbereichen um die Schwenkachse 14 verschwenkbar verbunden sind. Der Verbindungsarm 57 ist dabei mit dem Beobachtungsteil 4 und der Verbindungsarm 58 mit dem Beobachtungsteil 3 drehfest verbunden.

Selbstverständlich ist es aber auch möglich, dass das Verbindungselement 7 bzw. 56 durch mehrere Gelenkbrücken gebildet sein kann.

Dazu kann das Verbindungselement 7, 56 bzw. können die Verbindungsarme 57, 58 mit zwei Armen einer Gelenkanordnung für das Gelenk 13 verbunden sein. Es ist aber auch möglich, dass die beiden einander zugewandten Enden der Verbindungsarme 57, 58 derart ineinander greifen, dass sie durch eine die beiden durchsetzende Achse 59 das Gelenk 13 ausbilden.

Wie weiters aus der Darstellung in Fig. 5 zu ersehen ist, können die beiden Beobachtungsteile 3, 4 auch über ein oder mehrere Verbindungselemente 7, 56 verbunden bzw. zueinander relativ zueinander gehaltert bzw. geführt sein, welches in Richtung quer zu den Längsachsen 8, 9 teleskopartig verschiebbar ausgebildet sein können. Diese Teleskopanordnungen 60 ermöglichen es, die Distanz 10 der Längsachsen 8, 9 bzw. der Beobachtungsstrahlengänge 11, 12 an den jeweiligen Augenabstand des Benutzers eines derartigen Gerätes 1 anzupassen.

Die Teleskopanordnungen 60 bestehen jeweils aus ineinander geführten Führungsteilen 61, 62 wobei der Führungsteil 61 bewegungsfest mit dem Beobachtungsteil 4 und der Führungsteil 62 mit dem Beobachtungsteil 3 verbunden ist.

Diese Führungsteile sind hülsenartig ineinander verschiebbar gelagert und ermöglichen eine exakt parallele Verschiebung der beiden Beobachtungsteile 3, 4 zueinander in einer zu den Längsachsen 8, 9 senkrechten Richtung. Zum Festlegen einer bestimmten Distanz 10 zwischen den beiden Beobachtungsstrahlengängen 3, 4 kann der Reibungswiderstand zwischen den Führungsteilen 61, 62 so bemessen sein, dass es einen erhöhten Kraftaufwandes bedarf, um den Distanz 10 zu verändern. Selbstverständlich ist es aber auch möglich, eine entsprechende Fixierung in der gewünschten Distanz 10 durch mechanische, magnetische oder elektrisch angesteuerte Elemente vorzusehen. Durch entsprechende - nicht dargestellte - bevorzugt bedarfsweise lösbare Endanschlagmittel kann die maximale Distanz über die die beiden Beobachtungsteile 3, 4 in Richtung der Distanz 10 bewegt werden können, begrenzt werden.

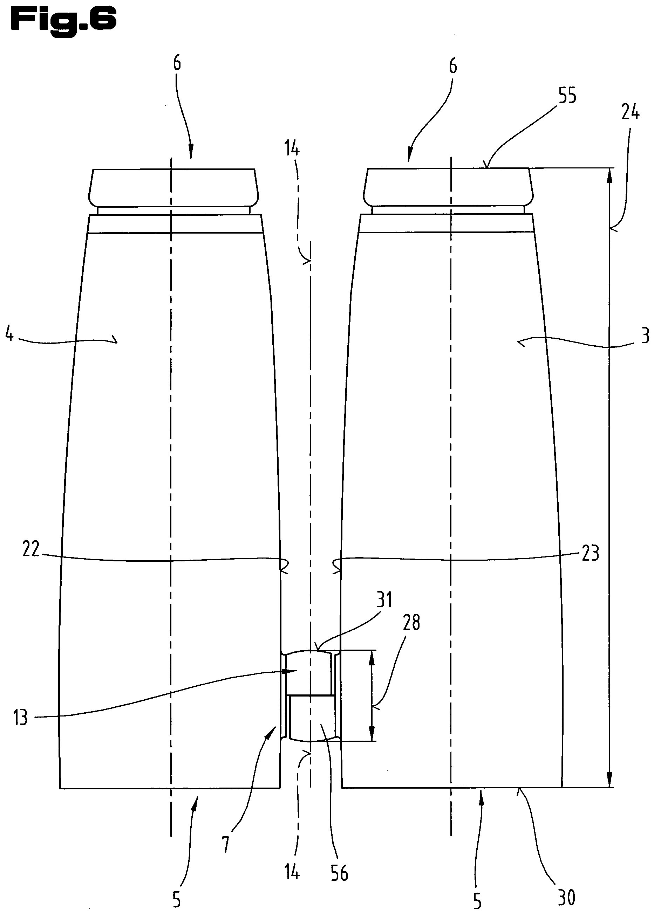

In Fig. 6 ist eine nicht beanspruchte Ausführungsvariante gezeigt, bei der die beiden Beobachtungsteile 3, 4 nur über ein einziges Verbindungselement 7 miteinander verbunden sind. Dabei ist dieses Verbindungselement 7 in diesem Fall jedoch an Stelle der Ausführungsvariante gemäß Fig. 1 bei der sie sich im Wesentlichen im okularseitigen Endbereich des Gerätes 1 befindet nunmehr im objektivseitigen Endbereich des Gerätes 1 also im Bereich des Objektivs 5 oder diesem näher angeordnet. Dementsprechend erstrecken sich die einander gegenüberliegenden Teilbereiche 22, 23 der Beobachtungsteile 3, 4 zwischen einer okularseitigen Stirnseite 31 des Verbindungselementes 7 und dem okularseitigen Ende der Beobachtungsteile 3, 4 oder des Gehäuses 1. Auch in diesem Fall ist es vorteilhaft, wenn die Länge 24 über die sich einander unmittelbar zugewandten Teilbereiche 22, 23 bzw. der Seitenflächen der Beobachtungsteile 3, 4 über einen Anteil von 20% - 90%, bevorzugt 30% - 80 % der Länge 24 der Beobachtungsteile 3, 4 erstrecken.

Generell kann auch festgehalten werden, dass eine vorteilhafte Ausführungsvariante darin liegt, wenn die Breite 27 des Verbindungselementes 7 oder die Summe der Breiten 27, 28 mehrerer Verbindungselemente 7, 56 die die beiden Beobachtungsteile 3, 4 in Richtung der Längsachsen 8, 9 verbinden, geringer ist als 80 bis 100 mm, bevorzugt 90 mm. Bevorzugt ist auch zu berücksichtigen, dass die Breite des Verbindungselementes 7 oder die Summe der Breiten 27, 28 mehrerer Verbindungselemente zwischen den beiden Beobachtungsteilen 3, 4 in Richtung der Längsachse 8, 9 geringer als 45 % der Länge 24 bzw. der Distanz zwischen dem objektivseitigen Ende 30 und dem okularseitigen Ende 55 beträgt.

Dabei ist es vorteilhaft, wenn die freizuhaltende Länge 21 der Teilbereiche 22, 23 eine Länge von mehr als 30 mm, bevorzugt 50 bis 120 mm aufweist.

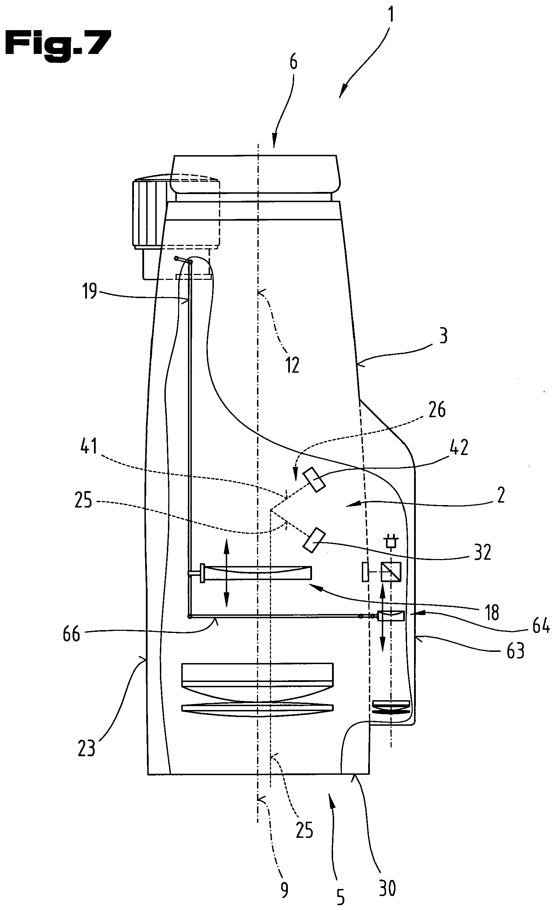

In Fig. 7 ist ein fernoptisches Gerät 1 in Seitenansicht teilweise aufgerissen gezeigt, wobei für gleiche Teile gleiche Bezugszeichen wie in den vorangegangen Figuren verwendet werden.

Aus dieser Darstellung ist zu ersehen, dass die Fokussiervorrichtung 18 für den Beobachtungsstrahlengang 12 vorgesehen ist. Die Verstellung der Fokussiervorrichtung 18 erfolgt beispielsweise über die Übertragungselemente 19 die lediglich schematisch dargestellt sind und wird diesbezüglich des Verstellvorganges mittels der Verstellvorrichtung 17 auf die entsprechenden Beschreibungsteile in Fig. 1 verwiesen. In diesem Fall ist jedoch die Messeinrichtung 2, also der Laser-Entfernungsmesser 26, nicht unmittelbar im Tubus bzw. Gehäuse des Beobachtungsteiles 3 angeordnet, sondern in einer entsprechenden Gehäuseerweiterung 63 die sich beispielsweise in der Benutzungsposition des Gerätes 1 bzw. des für überwiegend zum manuellen Halten und manuellen Anvisieren ausgeführten Gerätes 1 bzw. Fernglases an dessen Unterseite befindet. In dieser Gehäuseerweiterung 63 ist nun der Laser-Entfernungsmesser 26 mit der - nicht dargestellten - Steuer- und Auswerteeinheit 46 angeordnet, wie dies schematisch durch die Messstrahlengänge 25 und 41 des Messstrahlensenders 32 und Messstrahlenempfängers 42 beispielsweise einem Laser-Empfänger-Sender angedeutet ist. Nach dem nunmehr der Messstrahlengang 25 und 41 parallel jedoch distanziert vom Beobachtungsstrahlengang 12 verlaufen, sind diese beiden Messstrahlengänge 25, 41 über eine eigene, weitere Fokussiereinrichtung 64 fokussierbar, die zwischen dem Messstrahlensender 32 und Messstrahlenempfänger 42 und dem eigenen diesen zugeordneten Objektiv 65 angeordnet ist.

Ohne eine synchrone Scharfstellung der Messstrahlengänge 25 und 41 zu ermöglichen, ist die Verstellvorrichtung 17 über die Übertragungselemente nicht nur mit der Fokussiereinrichtung 18 für den Beobachtungsstrahlengang, sondern mit weiteren Übertragungselementen 66 auch mit der Fokussiereinrichtung 64 verbunden. Dabei kann zwischen der Fokussiereinrichtung 18 und der Fokussiereinrichtung 64 eine entsprechende Übersetzung vorgesehen sein, sodass eine exakte Scharfstellung der Strahlengänge 25 und 41 gleichzeitig wie die Scharfstellung des Beobachtungsstrahlenganges 11; 12 erfolgen kann. Lediglich der Ordnung halber sei erwähnt, dass die Anordnung der Gehäuseerweiterung 63 derart getroffen ist, dass sie nicht in den freizuhaltenden Bereich zwischen den Teilbereichen 22 und 23 - wie zuvor beschrieben - hineinragt.

Der Messstrahlensender 32 und Messstrahlenempfänger 42 sowie die ebenso vorzusehenden opto-elektronischen Anzeigeelemente weisen eine eigene Auswerteeinheit für die Laufzeit der Ermittlung auf oder ist eine Laufzeitermittlungseinrichtung in die Steuer- und Auswerteeinheit 46 integriert.

Zwischen dem opto-elektronischen Anzeigeelement 47 und der Steuer- und Auswerteeinrichtung 46 ist es auch möglich, eine zusätzliche Schalteinrichtung oder über die sofort betätigbare Schaltelemente vorzusehen, um unterschiedliche Symbole oder Daten zum Beispiel eine Zielmarke 50 und/oder eines Messwertes anzuzeigen.

Ebenso ist es über eine Schalteinrichtung möglich, die Strahlengänge 51, 49 des opto-elektronischen Anzeigeelements 47 zur Darstellung einer Zielmarke und eines Messwertes wahlweise in zumindest einen der Beobachtungsstrahlengänge 11; 12 einzuleiten.

Unabhängig von den optischen Bauelementen ist es von Vorteil, wenn die opto-elektronischen und elektronischen Bauteile sowie die Bauteile der Stromversorgung in den beiden Beobachtungsteilen 3, 4 derart angeordnet sind, dass eine ausgewogene Gewichtsverteilung stattfindet. Dazu ist es vorteilhaft, wenn diese opto-elektronischen und elektronischen Bauteile so in den beiden Beobachtungsteilen 3, 4 im Hinblick auf ihr Gewicht angeordnet werden, dass eine gleichmäßige, symmetrische Gewichtsbelastung bezüglich der Schwenkachse 14 erzielt wird.

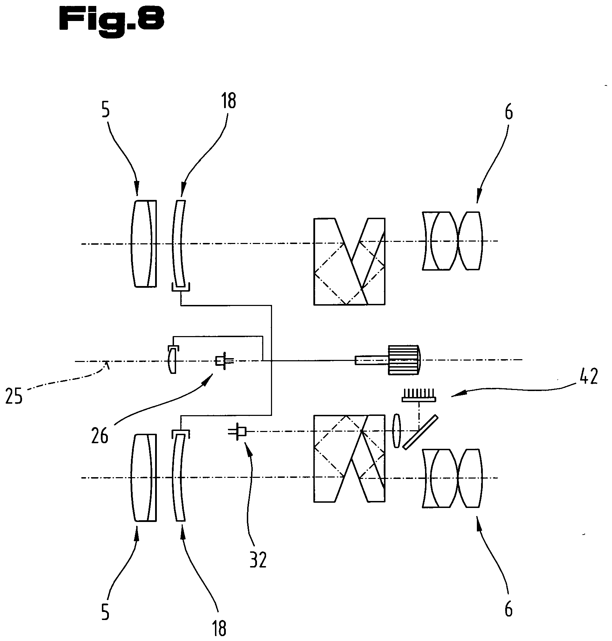

Die Figur 8 zeigt ein Gerät 1 mit einem Laser-Entfernungsmesser 26 bei dem für den Messstrahlengang 25 des Messstrahlensenders 32 eine von den Beobachtungsstrahlengängen 11, 12 separierte Anordnung und somit ein dritter Strahlengang vorgesehen ist.

Zur Scharfstellung ist in den ersten und zweiten Beobachtungsstrahlengang 11, 12 jeweils eine durch eine Fokussierlinse gebildete Fokussiereinrichtung 18 integriert. Indem Messstrahlengang 25 des Messstrahlensenders 32 ist objektseitig vor dem Messstrahlensender 32 eine Senderfokussiereinrichtung angeordnet. Durch Verstellen der Senderfokussiereinrichtung kann eine Scharfstellung des Bildes des Messstrahlensenders 32 in die Objektebene eines entfernten Objekts erreicht werden. Erfindungsgemäß ist bei diesem Gerät 1 vorgesehen, dass die Senderfokussiereinrichtung mit der Fokussiereinrichtung 18 der beiden visuellen Beobachtungsstrahlengänge 11, 12 gekoppelt ist, sodass gleichzeitig mit der Fokussierung der Bilder der visuellen Beobachtungsstrahlengänge 11, 12 eine Fokussierung des Bildes des Messstrahlensenders 32 erfolgen kann.

Auch mit den Beobachtungsgeräten 1 gemäß den in den Figuren 6 und 7 beschriebenen Ausführungsbeispielen ist eine Verfahrensweise entsprechend einem der vorstehend beschriebenen Verfahren zur Beobachtung und Messung der Entfernung und insbesondere einer automatisch bzw. halbautomatisch erfolgenden Scharfstellung möglich.

Vor allem wenn zwei Verbindungselemente 7, 56 vorgesehen sind, ist jedoch sicherzustellen, dass bei Draufsicht auf das Gerät 1 bezüglich einer Ebene in der die Längsachsen 8, 9 der Beobachtungsteile 3, 4 angeordnet sind, über eine parallel zur Längsachse 8, 9 der Beobachtungsteile 3, 4 gerichtete Länge 24 von zum Beispiel 20% - 90%, bevorzugt 30% - 80 % der Beobachtungsteile 3, 4 diese einander zugewandten Teilbereiche 22, 23 einander unmittelbar gegenüber liegen. Über diese Länge 24 ist daher der zwischen diesen Teilbereichen 22, 23 befindliche Freiraum durch keinerlei in diesen vorragende Teile der Beobachtungsteile 3, 4 bzw. Verbindungselemente 7, 56 aber auch nicht durch einen visuellen Beobachtungsstrahlengang 11, 12 oder dem Messstrahlengang 25, 41 eingeschränkt. Darunter versteht man, dass sich die Beobachtungsstrahlengänge 11, 12 und die Messstrahlengänge 25, 41 entweder innerhalb der Beobachtungsteile 3, 4 befinden oder derart abgestrahlt werden, dass sie außerhalb dieses durch das oder die Verbindungselemente und die einander zugewandten Teilbereiche 22, 23 der Beobachtungsteile 3, 4 gebildeten quaderförmigen Freiraum der sich senkrecht zu der vorgenannten Ebene erstreckt, befinden. Dabei soll die Länge 21 des freizuhaltenden Bereiches zwischen 20% - 90%, bevorzugt 30% - 80 % der Länge 24 der Beobachtungsteile 3, 4 aufweisen.

Lediglich der Vollständigkeit halber sei festgehalten, dass die Beobachtungsteile 3, 4 bzw. die diese bildenden Gehäuse als Tubus bzw. Tubusgehäuse ausgebildet sein können.

Diese Tubusgehäuse oder der Tubusse können sich auch nur über einen Teil der Länge 24 der Beobachtungsteile 3, 4 erstrecken und können aus einem Leichtmetallwerkstoff, insbesondere aus Magnesium bzw. einer magnesiumenthaltenden Legierung bestehen. Das Tubusgehäuse oder die Tubuse bzw. Beobachtungsteile 3 können aus einem Grundgehäuse, welches wie zuvor erwähnt aus Leichmetallwerkstoffen oder Composite-Materialien gebildet sein kann, hergestellt sein. Diese Gehäuseteile können aber unabhängig davon, zumindest vom Grundaufbau her symmetrisch ausgebildet sein. Dies bezieht sich vor allem auf die zylindrischen und konischen Abschnitte des Grundgehäuses und bevorzugt auf jene Teile, die für die Lagerung, Befestigung und Abstützung der optischen Bauteile wie beispielsweise des Objektivs 5 und Okulars 6 oder der Fokussiereinrichtung 18 benötigt werden. Unabhängig davon ist es aber natürlich möglich dieses Grundgehäuse mit unterschiedlichen Verstärkungselementen und Verkleidungselementen die auch nur partiell über die äußere oder innere Oberfläche der Beobachtungsteile 3, 4 bzw. deren Grundgehäuse angeordnet sein können, vorzusehen.

Im Rahmen der Erfindung ist es aber ebenso möglich, diese Beobachtungsteile 3, 4 bzw. deren Tuben bzw. Tubusgehäuse aus Compositmaterial, insbesondere aus Faser verstärktem Kunststoff herzustellen, wobei dafür die unterschiedlichsten aus dem Stand der Technik bekannten Fasern insbesondere auch hochfeste Fasern wie Karbon, Glas und Aramitfasern herangezogen werden können.

**Bezugszeichenaufstellung**

| | | | |
|---|---|---|---|
| 1 | Gerät | 41 | Messstrahlengang |
| 2 | Messeinrichtung | 42 | Messstrahlenempfänger |
| 3 | Beobachtungsteil | 43 | Empfangsoptiksystem |
| 4 | Beobachtungsteil | 44 | Empfängerprisma |
| 5 | Objektiv | 45 | Strahlengang |
| | | | |
| 6 | Okular | 46 | Steuer- und Auswerteeinheit |
| 7 | Verbindungselement | 47 | Anzeigeelement |
| 8 | Längsachse | 48 | Anzeigeoptik |
| 9 | Längsachse | 49 | Strahlengang |
| 10 | Distanz | 50 | Zielmarke |
| | | | |
| 11 | Beobachtungsstrahlengang | 51 | Strahlengang |
| 12 | Beobachtungsstrahlengang | 52 | Zielmarkenoptik |
| 13 | Gelenk | 53 | Verstellantrieb |
| 14 | Schwenkachse | 54 | Antriebsmotor |
| 15 | Pfeil | 55 | Ende |
| | | | |
| 16 | Winkelbereich | 56 | Verbindungselement |
| 17 | Verstellvorrichtung | 57 | Verbindungsarm |
| 18 | Fokussiereinrichtung | 58 | Verbindungsarm |
| 19 | Übertragungselement | 59 | Achse |
| 20 | Ebene | 60 | Teleskopanordnung |
| | | | |
| 21 | Länge | 61 | Führungsteil |
| 22 | Teilbereiche | 62 | Führungsteil |
| 23 | Teilbereiche | 63 | Gehäuseerweiterung |
| 24 | Länge | 64 | Fokussiereinrichtung |
| 25 | Messstrahlengang | 65 | Objektiv |
| | | | |
| 26 | Laser Entfernungsmesser | 66 | Übertragungselement |
| 27 | Breite | | |
| 28 | Breite | | |
| 29 | Stirnseite | | |
| 30 | Ende | | |
| | | | |
| 31 | Stirnseite | | |
| 32 | Messstrahlensender | | |
| 33 | Sendeoptiksystem | | |
| 34 | Senderoptik | | |
| 35 | Umlenkprisma | | |
| | | | |
| 36 | Teilerprisma | | |
| 37 | Dachkantenprisma | | |
| 38 | Fläche | | |
| 39 | Umlenkprisma | | |
| 40 | Objekt | | |

## Patentansprüche

1. Fernoptisches Gerät (1) mit zumindest zwei Beobachtungsteilen (3,4), deren objektiv- und okularseitigen Enden (30, 55) jeweils im Bereich des Objektives (5) bzw. Okulars (6) angeordnet sind, und jeweils mit einem Beobachtungsstrahlengang (11; 12) in den beiden Beobachtungsteilen (3,4) und zumindest einem Messstrahlengang (25) eines Laser-Entfernungsmessers (26), wobei die beiden Beobachtungsteile (3,4) durch zumindest ein Verbindungselement (7) miteinander verbunden und nebeneinander in im Wesentlichen paralleler Lage und in vorbestimmbarer Distanz (10) zueinander angeordnet sind, und wobei ein Freiraum vorgesehen ist, der sich zwischen einander zugewandten Teilbereichen (22, 23), der äußeren Umhüllungen der jeweils einander gegenüberliegenden Beobachtungsteile (3, 4) erstreckt, wobei die Beobachtungsteile (3,4) durch zwei Verbindungselemente (7, 56) miteinander verbunden sind und der Freiraum bei Draufsicht auf das Gerät (1) senkrecht bezüglich einer Ebene (20), in der Längsachsen (8,9) der Beobachtungsteile (3,4) angeordnet sind, von den einander zugewandten Teilbereichen (22, 23) und einander zugewandten Stirnseiten (29,31) der Verbindungselemente (7, 56) begrenzt ist, wobei der Freiraum von in diesen vorragenden Teilen freigehalten ist und sich bei Draufsicht auf das Gerät (1) senkrecht bezüglich der Ebene (20) über eine parallel zur Längsachse (8,9) der Beobachtungsteile (3,4) gerichtete Länge (21) von 20% - 90%, bevorzugt 30% - 80 % der Länge (24) der Beobachtungsteile (3,4) erstreckt, sodass Enden der Finger eines Benutzers zwischen die beiden Beobachtungsteile (3, 4) ungehindert vorragen können, und dass alle Beobachtungsstrahlengänge (11,12) und alle Messstrahlengänge (25) außerhalb dieses Freiraumes und die optischen und die opto-elektronischen und elektronischen Bauteile sowie die Stromversorgung des Laser-Entfernungsmessers (26) in zumindest einem der Beobachtungsteile (3,4) angeordnet sind,
- wobei die Beobachtungsstrahlengänge (11; 12) jeweils eine Fokussiereinrichtung (18), die durch eine Verstellvorrichtung (17) einstellbar ist, umfassen und zumindest ein Teil eines Strahlengangs (45) eines Lasersenders in einen der Beobachtungsstrahlengänge (11; 12) integriert ist,
- wobei die Vereinigung des Strahlenganges (45) des Lasersenders mit einem der Beobachtungstrahlengänge (11; 12) und der Übergang des Strahlenganges (51) einer Zielmarke (50) in den Beobachtungsstrahlengang (11; 12) an einer gemeinsamen Fläche (38) eines Umlenkprismas (39) lokalisiert sind.

2. Fernoptisches Gerät (1) mit zumindest zwei Beobachtungsteilen (3,4), deren objektiv- und okularseitigen Enden (30, 55) jeweils im Bereich des Objektives (5) bzw. Okulars (6) angeordnet sind, und jeweils mit einem Beobachtungsstrahlengang (11; 12) in den beiden Beobachtungsteilen (3,4) und zumindest einem Messstrahlengang (25) eines Laser-Entfernungsmessers (26), wobei die beiden Beobachtungsteile (3,4) durch zumindest ein Verbindungselement (7) miteinander verbunden und nebeneinander in im Wesentlichen paralleler Lage und in vorbestimmbarer Distanz (10) zueinander angeordnet sind, und wobei ein Freiraum vorgesehen ist, der sich zwischen einander zugewandten Teilbereichen (22, 23), der äußeren Umhüllungen der jeweils einander gegenüberliegenden Beobachtungsteile (3, 4) erstreckt, wobei die Beobachtungsteile (3,4) durch zwei Verbindungselemente (7, 56) miteinander verbunden sind und der Freiraum bei Draufsicht auf das Gerät (1) senkrecht bezüglich einer Ebene (20), in der Längsachsen (8,9) der Beobachtungsteile (3,4) angeordnet sind, von den einander zugewandten Teilbereichen (22, 23) und einander zugewandten Stirnseiten (29,31) der Verbindungselemente (7, 56) begrenzt ist, wobei die Summe der Breiten (27,28) der Verbindungselemente (7, 56) zwischen den beiden Beobachtungsteilen (3,4) in Richtung der Längsachsen (8,9) geringer ist als 90 mm und/oder als 45% der Länge (24) bzw. der Distanz zwischen dem objektiv- und dem okularseitigen Ende (30,55) des Gerätes (1), und wobei der Freiraum von vorragenden Teilen freigehalten ist und in Richtung der Längsachse (8,9) eine Länge (21) von 50-120 mm aufweist, sodass Enden der Finger eines Benutzers zwischen die beiden Beobachtungsteile (3, 4) ungehindert vorragen können, und dass alle Beobachtungsstrahlengänge (11, 12) und alle Messstrahlengänge (25) außerhalb dieses Freiraumes angeordnet sind und die optischen und die opto-elektronischen und elektronischen Bauteile sowie die Stromversorgung des Laser-Entfernungsmessers (26) in zumindest einem der Beobachtungsteile (3,4) angeordnet sind- wobei die Beobachtungsstrahlengänge (11; 12) jeweils eine Fokussiereinrichtung (18), die durch eine Verstellvorrichtung (17) einstellbar ist, umfassen und zumindest ein Teil eines Strahlengangs (45) eines Lasersenders in einen der Beobachtungsstrahlengänge (11; 12) integriert ist,
- wobei die Vereinigung des Strahlenganges (45) des Lasersenders mit einem der Beobachtungstrahlengänge (11; 12) und der Übergang des Strahlenganges (51) einer Zielmarke (50) in den Beobachtungsstrahlengang (11; 12) an einer gemeinsamen Fläche (38) eines Umlenkprismas (39) lokalisiert sind.

3. Fernoptisches Gerät (1) nach Anspruch 1, **dadurch gekennzeichnet, dass** sich der freigehaltene Freiraum zwischen den einander zugewandten Teilbereichen (22,23) der Beobachtungsteile (3,4) zwischen den zwei Verbindungselementen (7, 56) über eine parallel zur Längsachse (8,9) der Beobachtungsteile (3,4) gerichtete Länge (21) zwischen 50 und 120 mm erstreckt.

4. Fernoptisches Gerät (1) nach einem der vorhergehenden Ansprüche **dadurch gekennzeichnet, dass** ein Teil eines Messstrahlengangs (41) eines Messstrahlenempfängers (42) in dem ersten Beobachtungsstrahlengang (11; 12) integriert ist.

5. Fernoptisches Gerät (1) nach einem der vorhergehenden Ansprüche, **dadurch gekennzeichnet, dass** zumindest ein Tubusgehäuse der Beobachtungsteile (3;4) aus einem Leichtmetallwerkstoff, insbesondere aus Magnesium bzw. einer Magnesium enthaltenden Legierung besteht.

6. Fernoptisches Gerät (1) nach einem der vorhergehenden Ansprüche, **dadurch gekennzeichnet, dass** zumindest ein Tubusgehäuse der Beobachtungsteile (3;4) aus Composite Material, insbesondere aus faserverstärktem Kunststoff besteht.

7. Fernoptisches Gerät (1) nach einem der vorhergehenden Ansprüche, **dadurch gekennzeichnet, dass** zwischen den Beobachtungsteilen (3, 4) mehrere Gelenke (13) angeordnet und ausgebildet sind, wobei die Gelenke (13) zur Veränderung der Distanz (10) zwischen den beiden Längsachsen der Beobachtungsteile (3;4) in der durch diese verlaufenden Ebene zumindest zwischen 50 mm und 70 mm dienen.

8. Fernoptisches Gerät (1) nach einem der vorhergehenden Ansprüche, **dadurch gekennzeichnet, dass** die Verbindungselemente (7, 56) jeweils als Gelenk (13) mit einer zu den Längsachsen (8,9) der beiden Beobachtungsteile (3;4) annähernd parallel verlaufenden Schwenkachse (14) ausgebildet sind.

9. Fernoptisches Gerät (1) nach Anspruch 8, **dadurch gekennzeichnet, dass** die Schwenkachse (14) des Gelenks (13) etwa mittig zwischen den Längsachsen der beiden Beobachtungsteile (3,4) angeordnet ist.

10. Fernoptisches Gerät (1) nach Anspruch 7, **dadurch gekennzeichnet, dass** die Verbindungselemente (7, 56) jeweils zwei Gelenke (13) umfassen, wobei jeweils ein Gelenk (13) in beiden den beiden Beobachtungsteilen (3,4) zugewandten Endbereichen der Verbindungselemente (7, 56) angeordnet und mit einem jedem der beiden Beobachtungsteile (3,4) verbunden sind, wobei Schwenkachsen (14) der Gelenke (13) in etwa parallel zu den Längsachsen (8,9) der beiden Beobachtungsteile (3;4) verlaufen.

11. Fernoptisches Gerät (1) nach einem der vorhergehenden Ansprüche, **dadurch gekennzeichnet, dass** die Verbindungselemente (7, 56) jeweils einen jeweils an einem der beiden Beobachtungsteilen (3,4) angeordneten bzw. angeformten Verbindungsarm (57,58) umfassen.

12. Fernoptisches Gerät (1) nach einem der vorhergehenden Ansprüche, **dadurch gekennzeichnet, dass** mit zumindest einer der Fokussiereinrichtungen (18, 64) ein Verstellantrieb (53) verbunden ist.

13. Fernoptisches Gerät (1) nach Anspruch 12, **dadurch gekennzeichnet, dass** eine Steuer- und Auswerteeinheit (46) mit dem Verstellantrieb (53) bzw. einem Antriebsmotor (54) z.B. einem Schrittschaltmotor verbunden ist.

14. Fernoptisches Gerät (1) nach einem der Ansprüche 8 oder 9, **dadurch gekennzeichnet, dass** sämtliche optischen und/oder opto-elektronischen und elektronischen Bauteile in den beiden Beobachtungsteilen (3,4) symmetrisch bezüglich der Schwenkachse (14) angeordnet sind.

## Claims

1. A long-range optical device (1) having at least two observation parts (3, 4), the objective-side and ocular-side ends (30, 55) of which are each arranged in the region of the objective (5) or the ocular (6) and each having an observation beam path (11; 12) in the two observation parts (3, 4) and at least one measurement beam path (25) of a laser range finder (26), wherein the two observation parts (3, 4) are interconnected and arranged next to each other essentially parallel and spaced at a predeterminable distance (10) apart via at least one connection element (7), and a free space is provided, which extends between sub-regions (22, 23) facing each other of the outermost enclosures of the observation parts (3, 4) lying opposite each other, wherein the observation parts (3, 4) are interconnected by two connection elements (7, 56) and when the device (1) is viewed vertically from above with respect to a plane (20) in which longitudinal axes (8, 9) of the observation parts (3, 4) are arranged, the free space is delimited by the sub-regions (22, 23) facing each other and front faces (29, 31) facing each other of the connection elements (7, 56), wherein the free space is kept clear of parts projecting therein and, when the device (1) is viewed vertically from above with respect to the plane (20), extends over a length (21) aligned parallel to the longitudinal axis (8, 9) of the observation parts (3, 4) of 20% - 90%, preferably 30% - 80 % of the length (24) of the observation parts (3, 4) so that the fingertips of a user can protrude without obstruction between the two observation parts (3, 4), and wherein all observation beam paths (11, 12) and all measurement beam paths (25) are arranged outside this free space and the optical, the opto-electronic and electronic components and the electrical supply of the laser range finder (26) are arranged in at least one of the observation parts (3, 4),
- wherein the observation beam paths (11; 12) each comprise a focusing device (18) that can be adjusted by means of an adjustment mechanism (17), and at least a part of a beam path (45) of a laser transmitter is integrated into one of the observation beam paths (11; 12),
- wherein the merger of the beam path (45) of the laser transmitter with one of the observation beam paths (11; 12) and the transition of the beam path (51) of a target mark (50) into the observation beam path (11; 12) are located on a common surface (38) of a deflecting prism (39).

2. A long-range optical device (1) having at least two observation parts (3, 4), the objective-side and ocular-side ends (30, 55) of which are each arranged in the region of the objective (5) or the ocular (6) and each having an observation beam path (11; 12) in the two observation parts (3, 4) and at least one measurement beam path (25) of a laser range finder (26), wherein the two observation parts (3, 4) are interconnected and arranged next to one another essential parallel and spaced at a predeterminable distance (10) apart via at least one connection element (7), and a free space is provided, which extends between sub-regions (22, 23) facing each other of the outermost enclosures of the observation parts (3, 4) lying opposite each other, wherein the observation parts (3, 4) are interconnected by two connection elements (7, 56) and when the device (1) is viewed vertically from above with respect to a plane (20) in which longitudinal axes (8, 9) of the observation parts (3, 4) are arranged, the free space is delimited by the sub-regions (22, 23) facing each other and front faces (29, 31) facing each other of the connection elements (7, 56), wherein the sum of the widths (27, 28) of the connection elements (7, 56) between the two observation parts (3, 4) in the direction of the longitudinal axes (8, 9) is less than 90 mm and/or less than 45% of the length (24) or the distance between the objective-side and the ocular-side ends (30, 55) of the device (1), and wherein the free space is kept clear of parts projecting therein and has a length (21) of 50-120 mm in the direction of the longitudinal axis (8, 9) so that the fingertips of a user can protrude without obstruction between the two observation parts (3, 4), and wherein all observation beam paths (11, 12) and all measurement beam paths (25) are arranged outside this free space and the optical, the opto-electronic and electronic components and the electrical supply of the laser range finder (26) are arranged in at least one of the observation parts (3, 4), wherein the observation beam paths (11; 12) each comprise a focusing device (18), which is adjustable by means of an adjustment mechanism (17), and at least a part of a beam path (45) of a laser transmitter is integrated into one of the observation beam paths (11; 12),
- wherein the merger of the beam path (45) of the laser transmitter with one of the observation beam paths (11; 12) and the transition of the beam path (51) of a target mark (50) into the observation beam path (11; 12) are located on a common surface (38) of a deflecting prism (39).

3. The long-range optical device (1) according to claim 1, **characterized in that** the free space that is kept clear extends between the sub-regions (22, 23) facing each other of the observation parts (3, 4) between the two connection elements (7, 56) over a length (21) aligned parallel to the longitudinal axis (8, 9) of the observation parts (3, 4) of between 50 and 120 mm.

4. The long-range optical device (1) according to any one of the preceding claims, **characterized in that** a part of the measurement beam path (41) of one measurement beam receiver (42) is integrated in the first observation beam path (11; 12).

5. The long-range optical device (1) according to any one of the preceding claims, **characterized in that** at least one tubular housing of the observation parts (3, 4) consists of a light metallic material, in particular magnesium or a magnesium-based alloy.

6. The long-range optical device (1) according to any one of the preceding claims, **characterized in that** at least one tubular housing of the observation parts (3; 4) consists of composite material, in particular of fiber-reinforced plastic.

7. The long-range optical device (1) according to any one of the preceding claims, **characterized in that** several hinges (13) are arranged and constructed between the observation parts (3, 4), said hinges (13) serving for varying the distance (10) between the two longitudinal axes of the observation parts (3; 4) in the plane extending through them between 50 mm and 70 mm.

8. The long-range optical device (1) according to any one of the preceding claims, **characterized in that** the connection elements (7, 56) are each constructed as a hinge (13) having a pivot axis (14) running approximately parallel to the longitudinal axes (8, 9) of the two observation parts (3; 4).

9. The long-range optical device (1) according to claim 8, **characterized in that** the pivot axis (14) of the hinge (13) is arranged, for example, centrally between the longitudinal axes of the two observation parts (3, 4).

10. The long-range optical device (1) according to claim 7, **characterized in that** the connection elements (7, 56) each comprise two hinges (13), wherein in each case a hinge (13) is arranged in both end regions facing the two observation parts (3, 4) of the connection elements (7, 56) and is connected to each of the two observation parts (3,4), wherein pivot axes (14) of the hinges (13) extend, for example, parallel to the longitudinal axes (8, 9) of the two observation parts (3; 4).

11. The long-range optical device (1) according to any one of the preceding claims, **characterized in that** the connection elements (7, 56) each comprise a connection arm (57, 58) arranged or formed on one of the two observation parts (3, 4), respectively.

12. The long-range optical device (1) according to any one of the preceding claims, **characterized in that** an adjustment drive (53) is connected to at least one of the focusing devices (18, 64).

13. The long-range optical device (1) according to claim 12, **characterized in that** a control and analysis unit (46) is connected to the adjustment drive (53) or to a drive motor (54), for example a stepper motor.

14. The long-range optical device (1) according to one of claims 8 or 9, **characterized in that** all optical and/or opto-electronic and electronic components are arranged symmetrically with respect to the pivot axis (14) in the two observation parts (3, 4).

## Revendications

1. Appareil de téléoptique (1), avec au moins deux parties d'observation (3, 4) dont les extrémités côté objectif et côté oculaire (30, 55) sont disposées chacune au niveau de l'objectif (5) ou de l'oculaire (6) et chacune avec un trajet de rayon d'observation (11 ; 12) dans les deux parties d'observation (3, 4) et au moins un trajet de rayon de mesure (25) d'un dispositif de mesure de distance laser (26), les deux parties d'observation (3, 4) étant reliées entre elles par au moins un élément de liaison (7) et étant disposées l'une à côté de l'autre dans une position globalement parallèle et à une distance prédéterminée (10) l'une par rapport à l'autre, et un espace libre étant prévu, qui s'étend entre des parties (22, 23), orientées l'une vers l'autre, des enveloppes externes des parties d'observation (3, 4) disposées en face les unes des autres,
les parties d'observation (3, 4) étant reliées entre elles par l'intermédiaire deux éléments de liaison (7, 56) et l'espace libre étant limité, en vue de dessus de l'appareil (1) perpendiculairement par rapport à un plan (20) dans lequel les axes longitudinaux (8, 9) des parties d'observation (3, 4) sont disposées, par les parties (22, 23), orientées l'une vers l'autre et les faces frontales (29, 31), orientées l'une vers l'autre, des éléments de liaison (7, 56), l'espace libre étant maintenu libre de ces parties en saillie et, dans une vue de dessus de l'appareil (1) perpendiculairement par rapport au plan (20), s'étendant sur une longueur (21) parallèle à l'axe longitudinal (8, 9) des parties d'observation (3, 4) représentant de 20 % à 90 %, de préférence de 30 % à 80 % de la longueur (24) des parties d'observation (3, 4), de façon à ce que les extrémités des doigts d'un utilisateur puissent dépasser sans entraves entre les deux parties d'observation (3, 4) et à ce que tous les trajets des rayons d'observation (11, 12) et tous les trajets des rayons de mesure (25) soient disposés hors de cet espace libre et les composants optique et opto-électroniques et électroniques ainsi que l'alimentation électrique du dispositif de mesure de distance laser (26) soient disposés dans au moins une des parties d'observation (3, 4),
- les trajets des rayons d'observation (11 ; 12) comprenant chacun un dispositif de focalisation (18) qui peut être réglé à l'aide d'un dispositif de réglage (17) et au moins une partie d'un trajet de rayon (45) d'un émetteur laser étant intégrée dans un des trajets de rayons d'observation (11 ; 12),
- l'unification du trajet de rayon (45) de l'émetteur laser avec un des trajets de rayons d'observation (11 ; 12) et la transition du trajet de faisceau (51) d'un repère de visée (50) vers le trajet de rayon d'observation (11 ; 12) étant localisées sur une surface commune (38) d'un prisme de renvoi (39).

2. Appareil de téléoptique (1), avec au moins deux parties d'observation (3, 4) dont les extrémités côté objectif et côté oculaire (30, 55) sont disposées chacune au niveau de l'objectif (5) ou de l'oculaire (6) et chacune avec un trajet de rayon d'observation (11 ; 12) dans les deux parties d'observation (3, 4) et au moins un trajet de rayon de mesure (25) d'un dispositif de mesure de distance laser (26), les deux parties d'observation (3, 4) étant reliées entre elles par au moins un élément de liaison (7) et étant disposées l'une à côté de l'autre dans une position globalement parallèle et à une distance prédéterminée (10) l'une par rapport à l'autre, et un espace libre étant prévu, qui s'étend entre des parties (22, 23), orientées l'une vers l'autre, des enveloppes externes des parties d'observation (3, 4) disposées en face les unes des autres,
les parties d'observation (3, 4) étant reliées entre elles par l'intermédiaire deux éléments de liaison (7, 56) et l'espace libre étant limité, en vue de dessus de l'appareil (1) perpendiculairement par rapport à un plan (20) dans lequel les axes longitudinaux (8, 9) des parties d'observation (3, 4) sont disposées, par les parties (22, 23), orientées l'une vers l'autre, et les faces frontales (29, 31), orientées l'une vers l'autre, des éléments de liaison (7, 56), la somme des largeurs (27, 28) des éléments de liaison (7, 56) entre les deux parties d'observation (3, 4) en direction des axes longitudinaux (8, 9) étant inférieure à 90 mm et/ou inférieure à 45 % de la longueur (24) ou de la distance entre l'extrémité côté objectif et l'extrémité côté oculaire (30, 55) de l'appareil (1) et l'espace libre étant maintenu libre des parties en saillie présentant, en direction de l'axe longitudinal (8, 9), une longueur (21) de 50 à 120 mm, de façon à ce que les extrémités des doigts d'un utilisateur puissent dépasser sans entraves entre les deux parties d'observation (3, 4) et à ce que tous les trajets des rayons d'observation (11, 12) et tous les trajets des rayons de mesure (25) soient disposés hors de cet espace libre et les composants optique et opto-électroniques et électroniques ainsi que l'alimentation électrique du dispositif de mesure de distance laser (26) soient disposés dans au moins une des parties d'observation (3, 4), les trajets de rayons d'observation (11 ; 12) comprenant chacun un dispositif de focalisation (18) qui peut être réglé à l'aide d'un dispositif de réglage (17) et au moins une partie d'un trajet de rayon (45) d'un émetteur laser étant intégrée dans un des trajets de rayons d'observation (11 ; 12),
- l'unification du trajet de rayon (45) de l'émetteur laser avec un des trajets de rayons d'observation (11 ; 12) et la transition du trajet de faisceau (51) d'un repère de visée (50) vers le trajet de rayon d'observation (11 ; 12) étant localisées sur une surface commune (38) d'un prisme de renvoi (39).

3. Appareil de téléoptique (1) selon la revendication 1, **caractérisé en ce que** l'espace libre maintenu libre s'étend entre les parties (22, 23), orientées l'une vers l'autre, des parties d'observation (3, 4) entre les deux éléments de liaison (7, 56) sur une longueur (21) parallèle à l'axe longitudinale (8, 9) des parties d'observation (3, 4) entre 50 et 120 mm.

4. Appareil de téléoptique (1) selon l'une des revendications précédentes, **caractérisé en ce qu'**une partie d'un trajet de rayon de mesure (41) d'un récepteur de rayon de mesure (42) est intégrée dans le premier trajet de rayon d'observation (11 ; 12).

5. Appareil de téléoptique (1) selon l'une des revendications précédentes, **caractérisé en ce qu'**au moins un boîtier tubulaire des parties d'observation (3 ; 4) est constitué d'un matériau de type métal léger, plus particulièrement de magnésium ou d'un alliage contenant du magnésium.

6. Appareil de téléoptique (1) selon l'une des revendications précédentes, **caractérisé en ce qu'**au moins un boîtier tubulaire des parties d'observation (3 ; 4) est constitué d'un matériau composite, plus particulièrement d'une matière plastique renforcée par des fibres.

7. Appareil de téléoptique (1) selon l'une des revendications précédentes, **caractérisé en ce que**, entre les parties d'observation (3, 4), sont disposées et réalisées plusieurs articulations (13), les articulations (13) permettant de modifier la distance (10) entre les deux axes longitudinaux des parties d'observation (3 ; 4) dans le plan qui les traverse, entre 50 mm et 70 mm.

8. Appareil de téléoptique (1) selon l'une des revendications précédentes, **caractérisé en ce que** les éléments de liaison (7, 56) sont conçus chacun comme une articulation (13) avec un axe de pivotement (14) s'étendant de manière approximativement parallèle par rapport aux axes longitudinaux (8, 9) des deux parties d'observation (3 ; 4).

9. Appareil de téléoptique (1) selon la revendication 8, **caractérisé en ce que** l'axe de pivotement (14) de l'articulation (13) est disposé approximativement au centre entre les axes longitudinaux des deux parties d'observation (3, 4).

10. Appareil de téléoptique (1) selon la revendication 7, **caractérisé en ce que** les éléments de liaison (7, 56) comprennent chacun deux articulations (13), une articulation (13) étant disposée dans chacune des deux parties d'extrémité, orientées vers les deux parties d'observation (3, 4), des éléments de liaison (7, 56) et étant reliée avec une des deux parties d'observation (3, 4), les axes de pivotement (14) des articulations (13) s'étendant approximativement parallèlement aux axes longitudinaux (8, 9) des deux parties d'observation (3 ; 4).

11. Appareil de téléoptique (1) selon l'une des revendications précédentes, **caractérisé en ce que** les éléments de liaison (7, 56) comprennent chacun un bras de liaison (57, 58) disposé ou formé sur une des deux parties d'observation (3, 4).

12. Appareil de téléoptique (1) selon l'une des revendications précédentes, **caractérisé en ce qu'**un dispositif d'entraînement de réglage (53) est relié avec au moins un des dispositifs de focalisation (18, 64).

13. Appareil de téléoptique (1) selon la revendication 12, **caractérisé en ce qu'**une unité de commande et d'analyse (46) est reliée avec le dispositif d'entraînement de réglage (53) ou un moteur d'entraînement (54), par exemple un moteur pas-à-pas.

14. Appareil de téléoptique (1) selon l'une des revendications 8 ou 9, **caractérisé en ce que** tous les composants optiques et/ou opto-électroniques et électroniques sont disposés dans les deux parties d'observation (3, 4) de manière symétrique par rapport à l'axe de pivotement (14).
